(19) **Europäisches Patentamt**
**European Patent Office**
**Office européen des brevets**

(11) **EP 1 881 040 B1**

(12) **EUROPEAN PATENT SPECIFICATION**

(45) Date of publication and mention
of the grant of the patent:
**25.01.2012 Bulletin 2012/04**

(51) Int Cl.:
*C09D 5/18* (2006.01)     *B32B 7/02* (2006.01)
*B32B 9/00* (2006.01)     *C09D 7/12* (2006.01)
*F16L 59/02* (2006.01)

(21) Application number: **06731995.4**

(22) Date of filing: **17.04.2006**

(86) International application number:
**PCT/JP2006/308066**

(87) International publication number:
**WO 2006/115102 (02.11.2006 Gazette 2006/44)**

(54) **COATING LAYER FOR HEAT INSULATION, LAMINATE FOR HEAT INSULATION, COATING MATERIAL FOR HEAT INSULATION AND PROCESS FOR PRODUCTION OF THE COATING MATERIAL**

ÜBERZUGSSCHICHT ZUM ZWECKE DER WÄRMEDÄMMUNG, LAMINAT ZUM ZWECKE DER WÄRMEDÄMMUNG, ÜBERZUGSMATERIAL ZUM ZWECKE DER WÄRMEDÄMMUNG UND VERFAHREN ZUR HERSTELLUNG DES ÜBERZUGSMATERIALS

COUCHE DE REVETEMENT POUR ISOLATION THERMIQUE, STRATIFIE POUR ISOLATION THERMIQUE, MATERIAU DE REVETEMENT POUR ISOLATION THERMIQUE ET PROCEDE DE FABRICATION DU MATERIAU DE REVETEMENT

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.04.2005 PCT/JP2005/008257**
**28.04.2005 JP 2005130948**

(43) Date of publication of application:
**23.01.2008 Bulletin 2008/04**

(73) Proprietor: **Kureha Corporation**
**Tokyo 103-8552 (JP)**

(72) Inventors:
• **YUSA, Katsuhiro,**
**Iwaki Factory, Kureha Corp.**
**Iwaki-shi,**
**Fukushima 974-8686 (JP)**
• **SHIBUYA, Yukihiro,**
**Iwaki Factory, Kureha Corp.**
**Iwaki-shi,**
**Fukushima 974-8686 (JP)**

(74) Representative: **HOFFMANN EITLE**
**Patent- und Rechtsanwälte**
**Arabellastraße 4**
**81925 München (DE)**

(56) References cited:
**EP-A- 0 386 633     EP-A- 1 184 356**
**JP-A- 03 163 174     JP-A- 03 228 886**
**JP-A- 03 288 639     JP-A- 04 338 170**
**JP-A- 2000 327 441     JP-A- 2005 133 033**

• **DATABASE WPI Week 198930 Thomson Scientific, London, GB; AN 1989-216430 XP002530111 & JP 01 153572 A (DAINIPPON INK & CHEM KK) 15 June 1989 (1989-06-15)**
• **DATABASE WPI Week 199147 Thomson Scientific, London, GB; AN 1991-343277 XP002530112 & JP 03 228886 A (MITSUBISHI KASEI CORP) 9 October 1991 (1991-10-09)**
• **DATABASE WPI Week 199201 Thomson Scientific, London, GB; AN 1992-004575 XP002530113 & JP 03 258880 A (MITSUBISHI KASEI CORP) 19 November 1991 (1991-11-19)**

## Description

## Technical Field

The present invention relates to a laminated body for a thermal insulator, a coating agent for a thermal insulator, and a method of producing a coating agent for a thermal insulator.

## Background of the Invention

A carbon fiber-based molded thermal insulator (a laminated body for a thermal insulator) produced by molding carbon fibers is widely used as the thermal insulator for a high temperature furnace, such as a vacuum furnace and an atmosphere furnace, which is used for performing a heat treatment on metals, sintering fine ceramics, pulling various kinds of crystals, and the like. As a method of producing such a laminated body for a thermal insulator, conventionally employed has been a method, for example, in which a surface-covering material such as a graphite sheet and carbon fiber cloth is pasted on the surface of a carbonized-molded body such as carbon fiber felt exposed to high temperatures in order to improve the thermal insulation property, to prevent carbon fiber powders from flying apart, and to prevent a gas generated by sintering metals from permeating into the carbonized-molded body. However, such a method has had a problem that, when the surface of the carbonized-molded body is curved or has a complex configuration, it is difficult to paste the surface-covering material and the like while in close contact with the surface of the carbonized-molded body. Accordingly, as the method of producing such a laminated body for a thermal insulator, employed has been a method in which the surface of the carbonized-molded body is coated with a coating agent made of graphite powders and a macromolecule capable of being carbonized, then carbonized, graphitized, and thereby changed to a graphite film. Moreover, methods of producing such a laminated body for a thermal insulator, and various kinds of coating agents used in the production methods have been studied and disclosed.

For example, Japanese Unexamined Patent Application Publication No. Sho 50-104197 (JP 50-104197 A) discloses a method of producing a graphite molded body in which 10 to 30 parts by mass of a solid powder pitch and 15 to 25 parts by mass of a liquid bonding agent compatible with the solid powder pitch are added to, kneaded, and molded with 100 parts by mass of vein graphite, and thereafter calcined in a reducing atmosphere. Furthermore, JP 50-104197 A describes problems lying in the use of the vein graphite. Such a problem is described as follows. Natural vein graphite has a high graphitization degree and a high purity, but has a flat particle shape, and accordingly shows an orientation up to the full extent when pressed. For this reason, layered lamination cracks occur during molding, making it very difficult to mold properly, and to obtain a preferable molded body. In the method of producing a graphite molded body described in JP 50-104197 A, the solid powder pitch is eluted using a liquid bonding agent compatible with the solid powder pitch, and interferes with the orientation of vein graphite particles to prevent the layered lamination cracks from occurring when the vein graphite is used. However, in the method of producing a graphite molded body described in JP 50-104197 A, the smoothness and glossiness of the coated surface of the obtained coating layer for a thermal insulator are not sufficient. Moreover, the mechanical strength of the obtained coating layer for a thermal insulator is not sufficient. Furthermore, there are problems such as the peel-off of the coating layer for a thermal insulator, and a low dust-prevention property.

Japanese Unexamined Patent Application Publication No. Hei 3-163174 (JP 3-163174 A) discloses a heat-insulating coating agent containing at least a bonding agent, vein graphite powders having a particle diameter of 0.1 $\mu$m to 500 $\mu$m, and a solvent. Japanese Unexamined Patent Application Publication No. Hei 3-228886 (JP 3-228886 A) also discloses a coating agent, which is prepared by adding a fibrous material to a coating agent for a carbonaceous molded thermal insulator. The coating agent for a carbonaceous molded thermal insulator is formed of a carbonizable high-molecular-weight compound, a solvent for the carbonizable high-molecular-weight compound, and graphite powders. The fibrous material is added in the amount of 20 parts by mass or less relative to 100 parts by mass of the graphite powders, and is used as an agent for preventing crack occurrence and development during carbonization and graphitization. However, the coating agents described in JP 3-163174 A and JP 3-228886 A do not have a sufficient workability, and the smoothness and glossiness of the coated surface of the coating layer for a thermal insulator obtained after calcination are not sufficient. Moreover, the coating layer for a thermal insulator obtained after calcination using such a coating agent has problems such as the peel-off of the coating layer for a thermal insulator, and the low dust-prevention property, low oxidation resistance, and low mechanical strength of the coating layer for a thermal insulator. The coating agents described in JP 3-163174 A and JP 3-228886 A further have problems in safety and hygiene aspects of the working environment because the solvents for the coating agents are organic solvents.

EP-A-1 184 356 describes a composite carbonaceous heat insulator which comprises a carbonaceous heat-insulating member having a bulk density of 0.1-0.4 g/cm$^3$, a carbonaceous protecting layer having a bulk density of 0.3-2.0 g/cm$^3$ and comprising a carbon fiber structure and a thermally decomposed carbon penetrated into the structure, and a thermally decomposed carbon coating layer having a bulk density higher than that of the carbonaceous protecting layer, wherein the above carbonaceous protecting layer is jointed to at least a part of the carbonaceous heat-insulating member to form a jointed body, and the thermally decomposed carbon coating layer is formed at least on the face of the carbonaceous heat-insulating member in the surface of the jointed body.

JP-01-153572 A1 discloses a heat-insulation material having high surface hardness and scarcely generating graphite powder from the surface, which is produced by impregnating a mat or felt of bent carbon fibers having an aspect ratio of $\geq 5.0$ and specific volume of $\geq 1$ $cm^3/g$ is impregnated or coated with (A) a matrix resin produced by mixing 100 pbw of a phenolic resin, 20-100 pbw of furfuryl alcohol, furan resin or a mixture thereof, and 5-30 pbw of hexamethylenetetramine, curing the obtained prepreg with heat, impregnating or coating the obtained preformed heat-insulation material with (B) a dispersion of 5-30 pbw of graphite in 100 pbw of the matrix resin of the component A, curing by heating in a $N_2$ atmosphere and calcining in vacuum.

JP-03-258880 A1 relates to a highly durable coating agent providing a dense graphite film having improved durability and capable of prolonging a period up to change of heat insulating material, which is prepared by blending (A) 50-300 pbw of a carbonizable polymer compound with (B) $\leq 20$ pbw graphite powder having a particle diameter of $\leq 20$ $\mu$m and (C) 100-400 pbw per 100 pbw of (A) of a solvent.

EP-A-0 386 633 discloses a high bulk density carbon fiber felt having average bulk density of $\geq 0.1$ $g/cm^3$ without the carbon fiber felt being impregnated with resin and compression molded, which is made by mixing polymer-type fibers longitudinally shrinkable by calcination and another carbon fibers, mechanically compressing and integrating by a needle punch, and then shrinking the polymer-type fibers when calcined. The high bulk density carbon fiber felt can be used as a thermal insulator for a high-temperature furnace, a heat-resisting cushioning material, and a material for the electrode of a secondary battery.

**Disclosure of the Invention**

The present invention is made in consideration of the problems of the prior art. An object of the present invention is to provide a laminated body for a thermal insulator having a coating layer for a thermal insulator, which has a smooth and dense surface, is excellent in surface smoothness and surface glossiness, has a sufficiently low gas permeability (air permeability), and further is capable of imparting an excellent dust-prevention property, an excellent oxidation resistance, an excellent mechanical strength and an excellent heat insulating effect to a laminated body for a thermal insulator.

Moreover, another object of the present invention is to provide a coating agent for a thermal insulator to obtain the coating layer, and a method of producing the coating agent for a thermal insulator.

The present inventors have devoted themselves to studies so as to achieve the above object. As a result, the present inventors have discovered the following facts, and completed the present invention. Specifically, by adding a particular raw material for carbonization, vein graphite, viscosity-adjustment agent, and water-based solution to a coating agent for a thermal insulator, the workability of the obtained coating agent for a thermal insulator can be improved. Furthermore, the coating layer for a thermal insulator, which is obtained by coating with the coating agent for a thermal insulator thereon and by carbonizing the resultant, can be imparted with excellent surface smoothness, excellent surface glossiness and a sufficiently low air permeability. Still furthermore, a laminated body for a thermal insulator on which the coating layer for a thermal insulator is layered can be imparted with an excellent dust-prevention property, an excellent oxidation resistance, an excellent mechanical strength and an excellent heat insulating effect.

Hence, the present invention provides a laminated body, comprising (1) a carbonized-molded body having a bulk density of 0.08-0.8 $g/cm^3$, and (2) a coating layer which

(i) has an air permeability of $\leq 8.0$ NL/h $cm^2$ mm $H_2O$; determined by repeatedly measuring the differential pressure generated on the two sides of the laminated body by passing an air flow of 600 NL/h through a sample thereof having a circular area of 19 mm diameter and calculating the air permeability (Pair) according to the equation

$$P_{air} = Q/(S \cdot \Delta p)$$

wherein

Q = air flow rate (600 NL/h)

S = measurement area [$(1.9/2)^2 \cdot \Pi = 2,84$ $cm^2$]

$\Delta$p = average differential pressure (mm $H_2O$ of ten measurements; and

(ii) is layered on at least one surface of the carbonized-molded body by coating at least one surface of the carbonized-molded body with a coating agent for a thermal insulator comprising

(A) at least one raw material for carbonization selected from pitch, a phenol resin and a furan resin;

(B) vein graphite powders;

(C) at least one viscosity-adjustment agent selected from methyl cellulose, ethyl cellulose, methyl ethyl cellulose, hydroxyethyl methyl cellulose, hydroxymethyl ethyl cellulose, hydroxypropyl methyl cellulose, polyacrylamide, polyvinyl alcohol and starch; and

(D) a water-based solution capable of dispersing or dissolving (A) and of dissolving (C), which comprises water and at least one organic solvent compatible with water, selected from alcohols, aldehydes, ketones and glycols;

and then carbonizing the coating agent.

Also, there is provided a coating agent for a thermal insulator, comprising;

(A) at least one raw material for carbonization selected from pitch, a phenol resin and a furan resin;

(B) vein graphite powders;

(C) at least one viscosity-adjustment agent selected from methyl cellulose, ethyl cellulose, methyl ethyl cellulose, hydroxyethyl methyl cellulose, hydroxymethyl ethyl cellulose, hydroxypropyl methyl cellulose, polyacrylamide, polyvinyl alcohol and starch; and

(D) a water-based solution capable of dispersing or dissolving (A) and of dissolving (C), which comprises water and at least one organic solvent compatible with water, selected from alcohols, aldehydes, ketones and glycols.

Even further, the present invention provides a method of producing the above coating agent, comprising the steps of:

(i) dispersing vein graphite powders (B) in water to obtain a first dispersion liquid;

(ii) dispersing a viscosity-adjustment agent (C) in an organic solvent compatible with water, selected from alcohols, aldehydes, ketones and glycols, to obtain a second dispersion liquid;

(iii) mixing the first and second dispersion liquids to obtain a third dispersion liquid; and

(iv) dispersing a raw material for carbonization (A) in the third dispersion liquid.

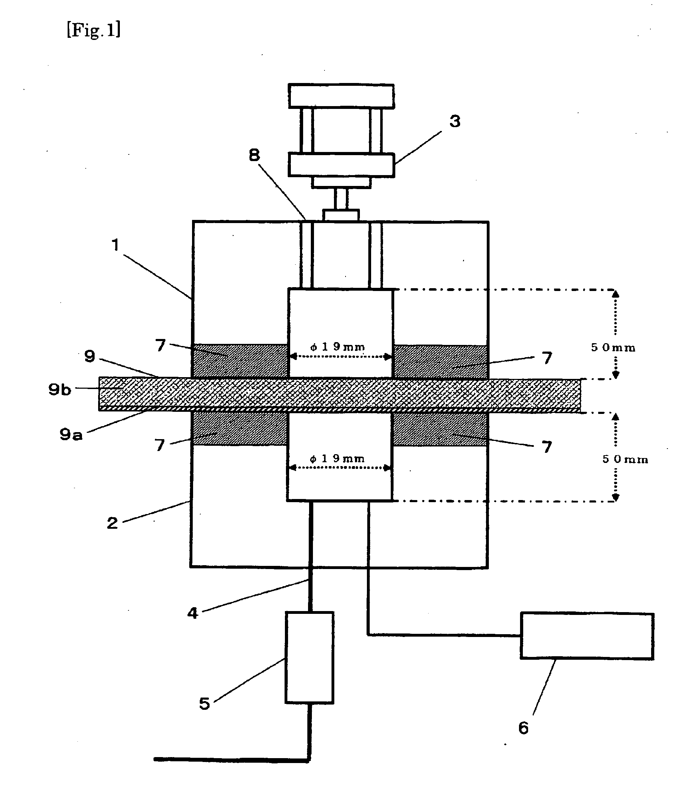

Preferred embodiments of the present invention are as defined in the appended dependent claims.
The coating layer of the laminated body for a thermal insulator of the present invention preferably has a thickness of 50 $\mu$m to 3 mm.
A method for measuring the air permeability in the present invention will be described here.
First, a air-permeability measuring device used to measure the air permeability will be described. Fig. 1 is a schematic longitudinal cross-sectional view of the air permeability measuring device used to measure the air permeability. The air permeability measuring device shown in Fig. 1 includes: a top cup 1 provided with a cylindrical concave portion having an inner diameter of 19 mm and a height of 50 mm in the center of the bottom surface thereof; and a bottom cup 2 provided with a cylindrical concave portion having an inner diameter of 19 mm and a height of 50 mm in the center of the top surface thereof. The top cup 1 and the bottom cup 2 are disposed to face each other so that the bottom surface of the top cup 1 and the top surface of the bottom cup 2 can be aligned with each other on the central axes of the surfaces. The bottom cup 2 is fixed in the air permeability measuring device. An air cylinder 3 is mounted to the top cup 1. The use of the air cylinder 3 allows the upward and downward movements of the top cup 1, and the adjustment of the surface pressure applied between the cups. An air introduction pipe 4 is connected to the bottom cup 2. A flow meter 5 is mounted to the air introduction pipe 4. Furthermore, a unit 6 for measuring a slight differential pressure is connected to the bottom cup 2. A chloroprene rubber 7 having a hardness of 30 to 40 is pasted to each of the bottom surface of the top cup 1 and the top surface of the bottom cup 2. A hole 8 for purging is mounted to the upper portion of the top cup 1. Furthermore, in the air permeability measuring device shown in Fig. 1, the surface of a sample 9 on the side of a coating layer for a thermal insulator 9a is set so as to face the top surface of the bottom cup 2. The sample 9 is thus sandwiched between the top cup 1 and the bottom cup 2. As the sample 9, a laminated body formed by layering the coating layer 9a on the surface of a carbonized-molded body 9b having a bulk density of 0.08 g/cm$^3$ to 0.8 g/cm$^3$ (longitudinal length 100 mm, transverse length 100 mm, and thickness 6 mm). As the flow meter 5, a flow-type flow meter which allows an adjustment between 100 NL/hr to 1000 NL/hr is used. As the unit 6 for measuring a slight differential pressure, "Digital Manometer Model 2654 (trade mark)" available from YOKOGAWA HOKUSHIN Electric Corporation which allows measurement in a measurement range of 0 mmH$_2$O to 200 mmH$_2$O is used.

Next, a process of measuring the air permeability using the air permeability measuring device will be described.

First, before setting the sample 9, air is introduced from the air introduction pipe 4 while the top cup 1 and the bottom cup 2 are kept closed. When the air is introduced, the air flow rate is controlled to 600 NL/hr using the flow meter 5. At this time, the zero correction is performed on the unit 6 for measuring a slight differential pressure to correct the influence of the pressure applied by the air permeability measuring device itself.

Subsequently, the sample 9 is set on the top surface of the bottom cup 2 so that the surface of the sample 9 on the side of the coating layer 9a can be on the side of the bottom cup 2. Thereafter, the top cup 1 is pressed downward using the air cylinder 3 to sandwich the sample 9 between the top cup 1 and the bottom cup 2. Note that, the pushing pressure (surface pressure of the air cylinder) at this time is adjusted so as to be 0.025 MPa. Then, the value of pressure (differential pressure), when the pressure value displayed on the unit 6 for measuring a slight differential pressure becomes constant, is measured while the air flow rate is maintained at 600 NL/hr. Such operation is repeated ten times while changing the measurement position of the sample to determine the average value Δp of the differential pressure measured in the above manner. The obtained average value Δp of the differential pressure is introduced in the following equation to determine the air permeability:

$$(Air\ permeability)=Q/(S×Δp)$$

(in the equation, Q indicates an air flow rate per hour (600 NL/hr), S indicates a measurement area [1.9/2)$^2$×Πcm$^2$], Δp indicates the average value of the differential pressure [unit: mmH$_2$O]). Note that, in the present invention, a carbonized-molded body 9b of the sample 9 is a porous material, and is not largely influenced by the pressure at the time of introducing the air at the air flow rate of 600 NL/hr. Accordingly, the air permeability measured using the sample 9 is considered as the air permeability of the coating layer for a thermal insulator.

The coating layer of the laminated body for a thermal insulator of the present invention preferably generates 300 or less of dust particles having a particle diameter of 0.3 μm or more when an inert gas is blown at a flow rate of 500 mL/min for 340 seconds on the laminated body on the entire surface of the carbonized-molded body 40 mm wide, 40 mm long and 40 mm thick.

A method of measuring an amount of the generated dust particles in the present invention will be described here.

First of all, a method of preparing a sample will be described. In such a sample preparation, a carbonized-molded body having a bulk density of 0.08 g/cm$^3$ to 0.8 g/cm$^3$ is first cut off using a diamond cutter in a size 40 mm wide, 40 mm long, and 40 mm thick. Then, the coating agent for a thermal insulator is coated on the entire surface of the carbonized-molded body using a brush at a rate of 1 kg/m$^2$, and dried at a temperature condition of 150°C without pressing for 3 hours, while the resin is hardened. Subsequently, the graphitization treatment is performed thereon in a vacuum furnace at a temperature condition of 2000°C for 1 hour to use the resultant as a sample.

Next, a process of measuring an amount of the generated dust particles will be described. In such a measurement of an amount of the generated dust particles, used is a measuring device including a three-hole buffer tank, a two-hole air-tight container for mounting a sample for the measurement of an amount of the generated dust particles, and a particle counter (available from RION Co., Ltd., trade name: "Particle Counter KC-01A Model") which are connected to one another in the described order using gas distribution pipes in a clean booth having a cleanliness of 100000. In performing such a measurement of an amount of the generated dust particles, an automatic measurement is first employed for 340 seconds under particle counter conditions including an ultra high purity (purity: 99.99%) argon gas flow rate of 500 mL/min, and a range of 0.1 ft$^3$. Then, while the opening surface of the leading edge of the gas distribution pipe having an inner diameter of 3.5 mm for introducing an argon gas and the surface of the coating layer of the sample are kept parallel, the center of the opening surface and the center of the surface of the coating layer are aligned on the same line. Furthermore, the center of the surface of the coating layer of the sample and the center of the opening surface are spaced apart 10 mm from each other. Thereafter, the sample is set in the center of the two-hole air-tight container for mounting a sample for the measurement of an amount of the generated dust particles. Subsequently, an ultra high purity (purity: 99.99%) argon gas is introduced into the three-hole buffer tank. The introducing ratio of the argon gas is set at 5 L/min, and a gas aspiration pump built in the particle counter is operated to aspirate the argon gas introduced into the three-hole buffer tank to the particle counter. The number of the particles having a particle diameter of 0.3 $\mu$m or more aspirated in such aspiration is measured by the particle counter. In the present invention, the number of the particles having a particle diameter of 0.3 $\mu$m or more measured in such a manner is considered as the amount of the generated dust particles.

The coating layer of the laminated body for a thermal insulator of the present invention, preferably shows a mass reduction ratio of 10.0% or less in an oxidation resistance test in which the laminated body on the entire surface of the carbonized-molded body 100 mm wide, 100 mm long and 40 mm thick is held in the air at a temperature condition of 600°C for 5 hours.

Moreover, the coating layer more preferably shows a mass reduction ratio of 10.0% or less in an oxidation resistance test in which the laminated body on the entire surface of the carbonized-molded body 100 mm wide, 100 mm long and 40 mm thick is held in the air at a temperature condition of 600°C for 10 hours.

A method of measuring an oxidation resistance in the present invention will be described here.

First of all, a method of preparing a sample will be described. In such a sample preparation, a carbonized-molded body having a bulk density of 0.08 $g/cm^3$ to 0.8 $g/cm^3$ is first cut off using a diamond cutter in a size 100 mm wide, 100 mm long and 40 mm thick. Then, the coating agent for a thermal insulator is coated on the entire surface of the carbonized-molded body using a brush at a rate of 1 $kg/m^2$, and dried at a temperature condition of 150°C without pressing for 3 hours, while the resin is hardened. Subsequently, the graphitization treatment is performed thereon in a vacuum furnace at a temperature condition of 2000°C for 1 hour to use the resultant as a sample.

Next, a process of measuring an oxidation resistance will be described. At first, a process of measuring an oxidation resistance when oxidation is carried out at 600°C for 5 hours (a 5 hour oxidation resistance) will be described. In such a 5-hour oxidation resistance measurement, the mass of the sample is firstly measured to a decimal place of 0.1 mg with an electrobalance. Then, the sample is put in a quartz case having a lid with a gas introduction hole. At this time, four pieces of platinum crucibles (inner diameter: 25 mm, bottom diameter: 15mm, height: 30mm) are placed at the four corners of and below the sample to keep the sample spaced from the bottom of the case so as to be evenly oxidized. Thereafter, the quartz case in which the sample is put is mounted in a muffle furnace (available from DENKEN CO., LTD, KDF P-90G) . The atmosphere inside the quartz case is replaced with nitrogen, and then the temperature is raised to 600°C. After the temperature is stabilized at 600°C, air is introduced at 2 L/min. Then, the condition is maintained for 5 hours. Thereafter, the atmosphere inside the quartz case is again replaced with nitrogen, and naturally cooled to 150°C. After the case is cooled to 150°C in the above manner, the quartz case is taken out of the electric furnace, and further cooled to room temperature in a desiccator. When such cooling is completed, the mass of the sample is measured to a decimal place of 0.1 mg with an electrobalance to determine a mass reduction ratio due to the oxidation at 600°C for 5 hours relative to the mass before the oxidation resistance test. In the present invention, the value of the mass reduction ratio obtained in the above manner is considered as a 5-hour oxidation resistance.

Next, a process of measuring an oxidation resistance when an oxidation is carried out at 600°C for 10 hours (a 10 hour oxidation resistance) will be described. Such a process of measuring a 10-hour oxidation resistance is the same as the process of measuring a 5-hour oxidation resistance except that the time period for which 600°C is maintained is changed from 5 hours to 10 hours. In the present invention, the value of the mass reduction ratio obtained in such a process of measuring a 10-hour oxidation resistance is considered as a 10-hour oxidation resistance.

The coating layer of the laminnated body for a thermal insulator of the present invention preferably shows 1.0 MPa or more of a bending strength determined from the maximum breaking load in a bending strength test in which a central concentrated load is applied under conditions of a supporting-point span of 80 mm and a crosshead speed of 1.0 mm/min using the laminated body on both top and bottom surfaces sized 20 mm wide and 100 mm long of the carbonized-molded body 20 mm wide, 100 mm long and 10 mm thick.

A method of measuring a bending strength in the present invention will be described here.

First of all, a method of preparing a sample will be described. In such a sample preparation, a carbonized-molded body having a bulk density of 0.08 $g/cm^3$ to 0.8 $g/cm^3$ is first cut off using a diamond cutter in a size 120 mm wide, 120 mm long and 10 mm thick. Then, the coating agent for a thermal insulator is coated on both of the top and bottom surfaces 120 mm wide, 120 mm long using a blush at a rate of 1 $kg/cm^2$, and dried at a temperature condition of 150°C without pressing for 3 hours, while the resin is hardened. Subsequently, the graphitization treatment is performed thereon in a vacuum furnace at a temperature condition of 2000°C for 1 hour. After that, the resultant is cut off, using a diamond cutter, in a size 20 mm wide and 100 mm long while the thickness is left as it is after the graphitization treatment, and used as a sample.

Next, a process of measuring a bending strength will be described. In such a bending strength measurement, a bending strength is determined from the maximum breaking load when a bending test is carried out by applying a central concentrated load under conditions of a supporting-point span of 80 mm, a crosshead speed of 1.0 mm/min, a supporting point for plastic, and a punch with a 5-mm radius by use of an autograph (available from SHIMADZU CORPORATION, trade name: "Shimadzu Autograph AGS-H 5kN") so that the coated surfaces are on a tension side and on a compression side.

The coating layer of the laminated body for a thermal insulator of the present invention is produced by coating at least one surface of the carbonized-molded body with a coating agent for a thermal insulator and then carbonizing the coating agent, the coating agent including:

(A) a raw material for carbonization selective from pitch, a phenol resin and a Curan resin;
(B) vein graphite powders;
(C) a viscosity-adjustment agent as defined below; and
(D) a water-based solution which comprises water and at least one organic solvent compatible with water selected from alcohols, aldehydes, ketones and glycol and which is capable of dissolving the viscosity-adjustment agent (C) and also capable of dispersing or dissolving the raw material for carbonization (A).

Furthermore, the coating layer of the laminated body for a thermal insulator of the present invention preferably contains, relative to 100 parts by mass of the raw material for carbonization, 10 to 200 parts by mass of the vein graphite powders, 2 to 50 parts by mass of the viscosity-adjustment agent, and 50 to 600 parts by mass of the water-based solution.

The viscosity-adjustment agent (C) is at least one kind selected from methylcellulose, ethylcellulose, methylethylcellulose, hydroxyethylmethylcellulose, hydroxymethylethylcellulose, hydroxypropylmethylcellulose, polyacrylamide, polyvinyl alcohol and starch. Particularly preferable is methylcellulose.

Moreover, the raw material for carbonization (A) is preferably a furan resin.

Furthermore, the average particle diameter of the vein graphite powders (B) preferably is within a range of 50 $\mu$m to 500 $\mu$m.

Moreover, the vein graphite powders (B) preferably contain first vein graphite powders having an average particle diameter within a range of 50 $\mu$m to 500 $\mu$m, and second vein graphite powders having an average particle diameter within a range of 1 $\mu$m or more to less than 50 $\mu$m. Additionally, the mass-based blending ratio of the first vein graphite powders to the second vein graphite powders (the first vein graphite powders: the second vein graphite powders) is preferably within a range of 4:6 to 8:2

A laminated body for a thermal insulator of the present invention comprises a carbonized-molded body having a bulk density of 0.08 g/cm$^3$ to 0.8 g/cm$^3$, and the above coating layer which is layered on at least one surface of the carbonized-molded body.

A coating agent for a thermal insulator of the present invention comprises:

(A) a raw material for carbonization selected from pitch, a phenol resin and a furan resin;
(B) vein graphite powders;
(C) a viscosity-adjustment agent as defined below; and
(D) a water-based solution which comprises water and at least one organic solvent compatible with water selected from alcohols, aldehydes, ketones and glycols, and which is capable of dissolving the viscosity-adjustment agent (C) and also capable of dispersing or dissolving the raw material for carbonization (A).

The coating agent for a thermal insulator of the present invention preferably contains, relative to 100 parts by mass of the raw material for carbonization, 10 to 200 parts by mass of the vein graphite powders, 2 to 50 parts by mass of the viscosity-adjustment agent, and 50 to 600 parts by mass of the water-based solution.

The viscosity-adjustment agent (C) is at least one kind selected from methylcellulose, ethylcellulose, methylethylcellulose, hydroxyethylmethylcellulose, hydroxymethylethylcellulose, hydroxypropylmethylcellulose, polyacrylamide, polyvinyl alcohol and starch. Particularly preferable is methylcellulose.

Moreover, the raw material for carbonization (A) is preferably a furan resin.

Furthermore, the average particle diameter of the vein graphite powders (B) are preferably within a range of 50 $\mu$m to 500 $\mu$m.

Moreover, the vein graphite powders (B) preferably contains first vein graphite powders having an average particle diameter within a range of 50 $\mu$m to 500 $\mu$m, and second vein graphite powders having an average particle diameter within a range of $\mu$m or more to less than 50 $\mu$m. Additionally, the mass-based blending ratio of the first vein graphite powders to the second vein graphite powders (the first vein graphite powders: the second vein graphite powders) is preferably within a range of 4:6 to 8:2.

A method of producing a coating agent for a thermal insulator of the present invention comprises the steps of dispersing vein graphite powders (B) in water to obtain a first dispersion liquid; dispersing a viscosity-adjustment agent (C) in an organic solvent compatible with water as defined above to obtain a second dispersion liquid; mixing the first dispersion liquid and the second dispersion liquid to obtain a third dispersion liquid; and dispersing a raw material for carbonization (A) in the third dispersion liquid

Note that, the reason why the coating agent of the present invention enables to obtain a coating layer which has a smooth and dense surface; is excellent in surface smoothness and surface glossiness; has a sufficiently low air permeability; and further is capable of imparting an excellent dust-prevention property, an excellent oxidation resistance, an excellent mechanical strength and an excellent heat insulating effect to a laminated body for a thermal insulator is not exactly known. However, the present inventors estimate the reason as follows. Specifically, in the present invention, the action of a particular viscosity-adjustment agent contained in the coating agent allows the fluidity of the water-based solution to be sufficiently inhibited. In addition, in the process of carbonizing the coating agent, while the water-based solution is evaporated, the viscosity-adjustment agent fills the gaps among the particles of the vein graphite powders together with the other components, and is fixed to the surface composition of the carbonized-molded body. In the above manner, the viscosity-adjustment agent is fixed while filling the gaps among the particles of the vein graphite powders. As a result, the occurrence of cracks is sufficiently prevented in the coating layer for a thermal insulator after the carbonization. Accordingly, the surface smoothness and surface glossiness are imparted to the coating layer. In particular, the peel-off of the coated surface is hardly seen. The coating layer after the carbonization thus has the excellent surface smoothness and surface glossiness. Therefore, the coating layer has high heat reflection efficiency, and thereby can give a sufficient heat insulating effect. Furthermore, it is possible to obtain a laminated body for a thermal insulator which is provided with an excellent dust-prevention property, an excellent oxidation resistance, an excellent mechanical strength and an excellent heat insulating effect by layering the smooth and dense coating layer for a thermal insulator on the carbonized-molded body in such a manner. In the coating layer , it is also expected that a working environment during the coating operation by using the water-based solution can be improved in safety and hygiene aspects.

The present invention makes it possible to provide a coating layer of a laminated body for a thermal insulator, which has a smooth and dense surface; is excellent in surface smoothness and surface glossiness; has a sufficiently low air permeability; and further is capable of imparting an excellent dust-prevention property, an excellent oxidation resistance, an excellent mechanical strength and an excellent heat insulating effect to a laminated body for a thermal insulator. Moreover, the present invention makes it possible to provide a laminated body for a thermal insulator provided with the coating layer, a coating agent for a thermal insulator to obtain the coating layer, and a method of producing the coating agent for a thermal insulator.

## Brief Description of the Drawings

Fig. 1 is a schematic longitudinal cross-sectional view of an air permeability measuring device used to measure the air permeability.

## Detailed Description of the Preferred Embodiments

The present invention will be described below in detail in line with preferred embodiments.

First, a coating layer of the laminated body for a thermal insulator of the present invention is a coating layer for a thermal insulator, in a laminated body including a carbonized-molded body and the coating layer layered on at least one surface of the carbonized-molded body,

wherein the bulk density of the carbonized-molded body is 0.08 g/cm$^3$ to 0.8 g/cm$^3$ and

the air permeability of the coating layer is 8.0 NL/hr·cm$^2$·mmH$_2$O or less.

The air permeability of the coating layer is 8.0 NL/hr·cm$^2$·mmH$_2$O or less, and preferably 7.5 NL/hr·cm$^2$·mmH$_2$O or less. If the air permeability exceeds 8.0 NL/hr·cm$^2$·mmH$_2$O, when an object to be treated containing a metal or an inorganic compound is treated in a heating furnace covered with the laminated body for a thermal insulator on which the coating layer is layered, the vapors of the metal and the inorganic compound generated from the treated object as well as a slight amount of air intruded from the outside of the heating furnace permeate the laminated body. As a result, the laminated body is easily worn out, and also a mechanical strength thereof is deteriorated. Note that a method of measuring such air permeability is as described above.

The thickness of the present coating layer is preferably 50 μm to 3 mm, more preferably 100 μm to 1 mm, and still more preferably 150 μm to 500 μm. When the thickness of the coating layer is less than 50 μm, it tends to be difficult to impart a sufficient oxidation resistance and a sufficient mechanical strength to the laminated body for a thermal insulator on which the coating layer is layered. In contrast, when the thickness of the coating layer exceeds 3 mm, the rate of increase in the effect on oxidation resistance is so not large. As the result, it tend to be an uneconomical situation. In addition, cracks occur due to expansion and contraction caused by heat. At the same time, the surface smoothness and the surface glossiness tend to be deteriorated.

Moreover, the coating layer preferably generates 300 or less (more preferably 250 or less) of dust particles having a particle diameter of 0.3 μm or more when an inert gas is blown at a flow rate of 500 mL/min for 340 seconds on the laminated body including the coating layer on the entire surface of the carbonized-molded body 40 mm wide, 40 mm long and 40 mm thick. If the amount of such generated dust particles exceeds 300, when an object to be treated containing a metal or an inorganic compound is treated in a heating furnace covered with the laminated body on which the coating layer is layered, the treated object tends to be contaminated by the particles (dust) having a particle diameter of 0.3 $\mu$m or more released in the heating furnace. Note that a method of measuring the amount of the generated dust particles is as described above.

Furthermore, , the coating layer preferably shows a mass reduction ratio of 10.0% or less (more preferably 7.0% or less) in an oxidation resistance test in which the laminated body including the coating layer on the entire surface of the carbonized-molded body 100 mm wide, 100 mm long and 40 mm thick is held in the air at a temperature condition of 600°C for 5 hours. Moreover, the coating layer further preferably shows a mass reduction ratio of 10.0% or less (particularly preferably 7.0% or less) in an oxidation resistance test in which the laminated body including the coating layer on the entire surface of the carbonized-molded body 100 mm wide, 100 mm long and 40 mm thick is held in the air at a temperature condition of 600°C for 10 hours. If the mass reduction ratio exceeds 10.0%, when the laminated body on which the coating layer is layered is used for a heating furnace, wearing due to the air intruded in the heating furnace is increased. As a result, the laminated body on which the coating layer is layered tend not to be able to be imparted with a sufficient heat insulating effect. In addition, the durability of the laminated body tends to be deteriorated. Note that a method of measuring an oxidation resistance is as described above.

The coating layer of the laminated body for a thermal insulator of the present invention preferably shows 1.0 MPa or more (more preferably 1.5 MPa or more) of a bending strength determined from the maximum breaking load in a bending strength test in which a central concentrated load is applied under conditions of a supporting-point span of 80 mm and a crosshead speed of 1.0 mm/min using the laminated body including the coating layer on both top and bottom surfaces 20mm wide and 100mm long of the carbonized-molded body 20 mm wide, 100 mm long and 10 mm thick. When the bending strength determined from the maximum breaking load is less than 1 .0 MPa, the handling easiness during transportation and during the mounting to the heating furnace tends to be deteriorated from the viewpoint of shape-maintaining property. Note that a method of measuring a bending strength is as described above.

The coating layer of the present laminated body for a thermal insulator is preferably produced by coating at least one surface of the carbonized-molded body with a coating agent for a thermal insulator of the present invention and then carbonizing the coating agent. The coating agent for a thermal insulator has been described above.

Next, the laminated body of the present invention on which the above-described coating layer is layered will be described. Specifically, the laminated body of the present invention comprises a carbonized-molded body having a bulk density of 0.08 g/cm$^3$ to 0.8 g/cm$^3$, and the present coating layer which is layered on at least one surface of the carbonized-molded body, and thereby is imparted with an excellent dust-prevention property, an excellent oxidation resistance, an excellent mechanical strength, and an excellent heat insulating effect.

The coating agent of the present invention which allows the formation of the coating layer will be described. The coating agent of the present invention comprises:

(A) the raw material for carbonization
(B) the vein graphite powders;
(C) the viscosity-adjustment agent; and
(D) the water-based solution as defined above.

In the present invention, a term "carbonization" means a heat treatment including a carbonization-calcination treatment at a generally used temperature condition of about 800°C or more to less than 2000°C, and a graphitization treatment at a temperature condition of 2000°C to 3000°C, and further means any of an object on which the heat treatment has been performed and an object on which the heat treatment is to be performed.

The raw material for carbonization (A) can have a carbonization ratio of 40% or more, preferably 50% or more. When the carbonization ratio is less than 40%, serious heat contraction is caused in the process of carbonization, and thereby cracks tend to be occurred. In addition, the coating layer for a thermal insulator tends to be peeled off because the amount of a binder component is insufficient after the carbonization.

Such a raw material for carbonization refers to a thermosetting resin or pitch, and the thermosetting resin is a phenol resin or a furan resin. Of such raw material for carbonizations, a furan resin is preferably used from the viewpoints of the higher adhesion property to the carbonized-molded body and of the appropriate fluidity.

The raw material for carbonization (A) has a viscosity that makes itself hard to flow together with the viscosity-adjustment agent used in combination therewith at the temperatures until the coating agent for a thermal insulator is carbonized. Moreover, the raw material for carbonization has the fluidity enough to fill the gaps among the vein graphite powders. The fluidity of such a raw material for carbonization is influenced by the kind of the raw material for carbonization, the composition of the obtained coating agent for a thermal insulator, the kind and nature of the viscosity-adjustment agent to be used, the size of the vein graphite powders, the bulk density of the coated surface, and the like. For this reason, it is necessary to select the fluidity suitably in accordance with the circumstances. As a method of selecting such fluidity, in practice, employed is a method in which a condition is suitably selected by judging while watching the following circumstances. A carbonized-molded body is coated with the coating agent for a thermal insulator. Then, the temperature is increased to the carbonization temperature to carbonize. Subsequently, a coating component is flowed from the coated surface to the inside.

The vein graphite powders (B) contained in the coating agent acts so that each component can hardly flow in the process of carbonization of the coating agent. For this reason, the vein graphite powders are required to have a certain size (average particle diameter) to achieve the action. However, the average particle diameter of such vein graphite powders depends on the bulk density of the carbonized-molded body and the viscosity-adjustment agent contained in the coating agent and thus cannot generally be specified. For example, in the case where the bulk density of the coated surface is low, if the average particle diameter of the vein graphite powders is too small, the coating agent easily flows from the coated surface to the inside. Therefore, when the vein graphite powders having a larger average particle diameter are not used, the adhesion strength tends to be lower as compared to the case where the bulk density of the coated surface is high. On the other hand, if the average particle diameter of the vein graphite powders are too large, the coating property and dispersion stability of the coating agent for a thermal insulator to be obtained tend to be deteriorated. As a result, the coating agent tends to be difficult to handle. For this reason, the average particle diameter of the vein graphite powders needs to be suitably selected.

Furthermore, when the bulk density of a material to be coated is 0.08 g/cm$^3$ to 0.8 g/cm$^3$, the average particle diameter of the vein graphite powders are preferably 50 $\mu$m to 500 $\mu$m, and more preferably 60 $\mu$m to 300 $\mu$m. When the average particle diameter of the vein graphite powders are less than 50 $\mu$m, the heat reflection ratio and the heat insulating effect tend to be easily deteriorated. At the same time, the adhesion strength of the coating layer in the laminated body tends to be reduced, and thereby the coating layer is easily peeled off. In contrast, when the average particle diameter of the vein graphite powders exceeds 500 $\mu$m, the coating property onto the thermal insulator is deteriorated, and thereby the workability tend to be reduced. At the same time, the dispersion stability tends to be reduced, resulting in the deterioration of the surface smoothness and surface glossiness of the obtained coating layer.

In addition, in combination with the vein graphite powders having the average particle diameter as described above (hereinafter referred to as "first vein graphite powders"), other vein graphite powders having a smaller average particle diameter (hereinafter referred to as "second vein graphite powders") is preferably used. By containing the second vein graphite powders in the coating agent for a thermal insulator, the second vein graphite powders intrudes in the gaps created among the particles of the first vein graphite powders during coating, and thereby making it possible to reduce the gaps among the particles of the vein graphite powders. As a result, by containing the second vein graphite powders, a higher heat insulating effect, a higher oxidation resistance, and a higher mechanical strength tend to be obtained. The average particle diameter of the second vein graphite powders are preferably 1 $\mu$m or more to less than 50 $\mu$m, and more preferably 5 $\mu$m to 30 $\mu$m inclusive. Specifically, in the present invention, the vein graphite powders preferably contain the first vein graphite powders having an average particle diameter within a range of 50 $\mu$m to 500 $\mu$m, and the second vein graphite powders having an average particle diameter within a range of 1 $\mu$m or more to less than 50 $\mu$m (more preferably 5 $\mu$m to 30 $\mu$m inclusive). If the average particle diameter of the second vein graphite powders is less than 1 $\mu$m, the particle diameter is too small, thereby causing powder dusts to fly apart during mixing. At the same time, the second vein graphite powders tend to be removed from the coating layer for a thermal insulator, increasing the dust amount. In contrast, when the average particle diameter of the second vein graphite powders are 50 $\mu$m or more, the average particle diameter of the second vein graphite powders are equal to or exceeds the average particle diameter of the first vein graphite powders. As a result, the effect of reducing the gaps among the particles of the vein graphite powders tends not to be obtained.

As the mass-based blending ratio of the first and second vein graphite powders, the first vein graphite powders: the second vein graphite powders is preferably around 4:6 to 8:2, and more preferably around 4:6 to 7:3. When the blending ratio of the first vein graphite powders is less than the lower limit, there are tendencies for an amount of the generated dust particles to be increased, for the surface glossiness to be deteriorated, and for the heat insulating effect to be deteriorated. On the other hand, when the blending ratio exceeds the upper limit, there are tendencies for the oxidation resistance to be reduced, and for the surface smoothness to be deteriorated.

Furthermore, the first and second vein graphite powders are not particularly limited, but natural products (including block natural graphite having a crystal orientation), kish graphite generated at the bottom of a blast furnace, or the like, can be used.

The viscosity-adjustment agent (C) contained in the coating agent for a thermal insulator is able to adhere a carbonized matter or a component in the process of carbonization after the water-based solution to be described below is evaporated in the process of carbonization. The viscosity-adjustment agent is at least one selected from methylcellulose, ethylcellulose, methylethylcellulose, hydroxyethylmethylcellulose, hydroxymethylethylcellulose, hydroxypropylmethylcellulose, polyacrylamide, polyvinyl alcohol and starch. Of these viscosity-adjustment agents, preferably used are methylcellulose, ethylcellulose, hydroxyethylmethylcellulose and hydroxypropylmethylcellulose. Particularly preferably used is methylcellulose. By using these viscosity-adjustment agents, it is possible to surely inhibit the fluidity of the water-based solution. Furthermore, in the process of carbonizing the coating agent for a thermal insulator, the viscosity-adjustment agent fills the gaps among the particles of the vein graphite powders in cooperation with other component. As a result, the effect of the fixing of the viscosity-adjustment agent to the surface composition of the coated carbonized-molded body tends to be more surely obtained. Specifically, by using the viscosity-adjustment agent, it is possible to fix with, and concurrently fill the gaps among the particles of the vein graphite powders, with the viscosity-adjustment agent. As a result, the occurrence of cracks tend to be satisfactorily prevented in the coating layer after the carbonization. Accordingly, more excellent surface smoothness and surface glossiness can be obtained. At the same time, the peel-off of the coated surface tends to be prevented more surely.

The kind and content of the viscosity-adjustment agent are suitably selected and used so that the viscosity of the obtained coating agent at 20°C can be preferably within a range of 50 mPa·s to 15000 mPa·s, and more preferably within a range of 1000 mPa·s to 10000 mPa·s. By using the viscosity-adjustment agent in the above manner so that the viscosity of the coating agent at 20°C is within the above range, it is possible to sufficiently inhibit the flow of the other component in the process of carbonization. Accordingly, each component including the viscosity-adjustment agent is sufficiently fixed to the carbonized component on the contacted surface of the carbonized-molded body. Therefore, the stronger bonding tends to be obtained between the coating agent and the coated surface. Moreover, by sufficiently inhibiting the flow of the other component in the process of carbonization using the viscosity-adjustment agent in the above manner, the obtained coating layer is smooth and dense. Thereby, it is to sufficiently reduce the air permeability. Furthermore, it is possible to improve the dust-prevention property, oxidation resistance and mechanical strength.

When the thickness of the coating layer obtained by carbonization is 50 $\mu$m to 3 mm, the kind and content of the viscosity-adjustment agent are suitably selected and used so that the viscosity of the prepared coating agent at 20°C is more preferably within a range of 2000 mPa·s to 10000 mPa·s, and particularly preferably within a range of 2000 mPa·s to 8000 mPa·s from the viewpoints to further improve the dust-prevention property, oxidation resistance, and mechanical strength thereof, and to make the air permeability more surely 8.0 NL/hr·cm$^2$·mmH$_2$O or less.

The water-based solution (D) contained in the coating agent for a thermal insulator is to dissolve the viscosity-adjustment agent (C) and to disperse or dissolve the raw material for carbonization (A). The water-based solution includes water and an organic solvent compatible with water selected from alcohols such as methyl alcohol, ethyl alcohol, propyl alcohol, isopropyl alcohol, n-butyl alcohol, isobutyl alcohol, sec-butyl alcohol, tert-butyl alcohol, ethyl cellosolve, and furfuryl alcohol; ketones such as acetone and methyl ethyl ketone; aldehydes such as 2-furyl aldehyde; and glycols such as ethylene glycol, propylene glycol, trimethylene glycol, butyl diglycol, 1, 5-pentanediol, 1, 6-hexanediol and 1, 7-heptanediol. As the water-based solution, a mixture of water and one kind or two kinds or more kinds of the organic solvents other than water can be used. Moreover, as the water-based solution, a mixed agent prepared by combining water and the following organic solvent compatible with water is preferably used. As the organic solvent, preferably used are butyl diglycol, ethyl cellsolve, and the like, from the viewpoints of high compatibility with water and with the viscosity-adjustment agent, and more preferably used is butyl diglycol. Note that, in the present invention, the viscosity-adjustment agent is contained in the coating agent for a thermal insulator. Therefore, each component does not flocculate so as not to be in a block form in the coating agent, and can be kept uniformly dispersed.

Furthermore, the coating agent preferably contains, relative to 100 parts by mass of the raw material for carbonization (A), 10 to 200 parts by mass of the vein graphite powders (B), 2 to 50 parts by mass of the viscosity-adjustment agent (C), and 50 to 600 parts by mass of the water-based solution (D).

When the content of the vein graphite powders are less than 10 parts by mass relative to 100 parts by mass of the raw material for carbonization, it is difficult to reduce the thermal conductivity. Accordingly, the heat insulating effect tends to be reduced. On the other hand, when the content of the vein graphite powders exceeds 200 parts by mass relative to 100 parts by mass of the raw material for carbonization, the coating property to the carbonized-molded body and the dispersion stability are reduced. Accordingly, the surface smoothness and surface glossiness of the obtained coating layer tend to be reduced. The content of the vein graphite powders are more preferably 20 to 150 parts by mass relative to 100 parts by mass of the raw material for carbonization, and further preferably 30 to 130 parts by mass, from the viewpoints to improve the dust-prevention property, oxidation resistance, and mechanical strength of the obtained coating layer, and to make the air permeability more surely 8.0 NL/hr·cm$^2$·mmH$_2$O or less.

When the content of the viscosity-adjustment agent is less than 2 parts by mass relative to 100 parts by mass of the raw material for carbonization, the viscosity of the obtained coating agent at 20 °C is reduced. As a result, it is difficult to sufficiently inhibit the flow of the other components in the process of carbonization. Accordingly, the dust-prevention property, oxidation resistance, and mechanical strength of the coating layer obtained by carbonization tend to be reduced. At the same time, it tends to be difficult to inhibit the air permeability to a low level. In contrast, when the content of the viscosity-adjustment agent exceeds 50 parts by mass relative to 100 parts by mass of the raw material for carbonization, the viscosity of the obtained coating agent at 20°C is too high. As a result, workability such as coating property tend to be reduced. Moreover, the surface smoothness and surface glossiness of the obtained coating layer tend to be deteriorated. The content of the viscosity-adjustment agent is more preferably 2 to 40 parts by mass, and further preferably 3 to 30 parts by mass, from the viewpoints to improve the dust-prevention property, oxidation resistance, and mechanical strength of the obtained coating layer, and to make the air permeability more surely 8.0 NL/hr·cm$^2$·mmH$_2$O

or less.

Furthermore, when the content of the water-based solution is less than 50 parts by mass relative to 100 parts by mass of the raw material for carbonization, the viscosity of the coating agent is too high. As a result, workability such as coating property tends to be reduced. In contrast, when the content of the water-based solution exceeds 600 parts by mass relative to 100 parts by mass of the raw material for carbonization, the concentration of the other components in the coating agent is reduced. As a result, a large number of coating applications tend to be required to obtain the coating layer with a predetermined thickness. The content of the water-based solution is more preferably 100 to 500 parts by mass relative to 100 parts by mass of the raw material for carbonization from the viewpoints to improve the dust-prevention property, oxidation resistance, and mechanical strength of the obtained coating layer , and to make the air permeability more surely 8.0 NL/hr·cm$^2$·mmH$_2$O or less.

Carbon fibers can be contained, in addition to each component described above, in the coating agent . Such carbon fibers contribute to reinforce the coating layer. Accordingly, by containing the carbon fibers in the coating agent , the strength of the obtained laminated body for a thermal insulator can be further improved. The carbon fiber may be any carbon fiber of PAN based, pitch-based, and rayon-based fibers. It is preferable to use the carbon fibers having an average fiber length of 0.02 mm to 2 mm, and more preferably 0.05 mm to 1.5 mm. When the average fiber length is less than 0.02 mm, the effect to reinforce the obtained coating layer tends to be reduced. In contrast, when the average fiber length exceeds 2 mm, it tends to be difficult to uniformly disperse the fibers in the coating agent . In other words, by using the carbon fibers having the average fiber length within the above-described range, the effect to reinforce the obtained coating layer and the uniform dispersion of the carbon fibers tend to be kept well-balanced. Note that a method of measuring the average fiber length of the carbon fibers will be described in the following Examples below.

The content of the carbon fibers is preferably 200 parts by mass or less relative to 100 parts by mass of the raw material for carbonization, and more preferably 100 parts by mass or less. When the content of the carbon fibers exceeds 200 parts by mass, it tends to be difficult to uniformly disperse the carbon fibers.

Furthermore, the coating agent preferably has a viscosity within a range of 50 mPa·s to 15000 mPa·s, and more preferably 1000 mPa·s to 10000 mPa·s, at a temperature condition of 20°C. Moreover, when the thickness of the coating layer to be obtained is 50 μm to 3 mm, the coating agent further preferably has a viscosity within a range of 2000 mPa·s to 10000 mPa·s, and particularly preferably 2000 mPa·s to 8000 mPa·s, at a temperature condition of 20°C from the viewpoints to improve the oxidation resistance, dust-prevention property, and mechanical strength, and to make the air permeability more surely 8.0 NL/hr·cm$^2$·mmH$_2$O or less. When the viscosity of the coating agent is less than the lower limit, in coating the surface of the carbonized-molded body with the coating agent, an excessive amount of the coating agent is intruded inside the carbonized-molded body. As a result, it becomes difficult to form the coating layer having a uniform thickness. Accordingly, the air permeability of the obtained coating layer tend to be increased. At the same time, the oxidation resistance, dust-prevention property, and mechanical strength tend to be deteriorated. In contrast, when the viscosity of the coating agent exceeds the upper limit, the workability in coating with the coating agent is reduced, and the surface smoothness and surface glossiness tend not to be obtained. At the same time, it is difficult to uniformly disperse each component in the coating agent. As a result, the oxidation resistance, dust-prevention property, and mechanical strength of the obtained coating layer tend to be deteriorated·

Next, a method of producing the present coating agent will be described. The method of producing a coating agent is not particularly limited, and a method in which vein graphite powders, a viscosity-adjustment agent, and a raw material for carbonization can uniformly be dispersed in a water-based solution can suitably be employed. However, for producing the present coating agent the method described below is preferably employed.

Each component used in the method of producing a coating agent of the present invention and the content thereof in the coating agent are as described above.

The method of producing the present coating agent comprises the steps of: dispersing vein graphite powders (B) in water to obtain a first dispersion liquid; dispersing a viscosity-adjustment agent (C) in an organic solvent compatible with water selected from alcohols, aldehydes, ketones and glycols to obtain a second dispersion liquid; mixing the first dispersion liquid and the second dispersion liquid to obtain a third dispersion liquid; and dispersing a raw material for carbonization (A) in the third dispersion liquid to obtain a coating agent for a thermal insulator.

In the present method , vein graphite powders are first put in water being stirred with a stirrer. Then, the vein graphite powders are uniformly dispersed to obtain a first dispersion liquid. In the first dispersion liquid, the water used as a dispersion medium is selected from the above-described water-based solution. Furthermore, the above-described carbon fiber in addition to the vein graphite powders can be contained in the first dispersion liquid as necessary.

Then, a viscosity-adjustment agent is dispersed in an organic solvent compatible with water while being stirred until the block thereof disappears to obtain a second dispersion liquid.

Subsequently, the second dispersion liquid is added to the first dispersion liquid thus obtained, and uniformly mixed by sufficiently stirring to obtain a third dispersion liquid. Thereafter, a raw material for carbonization (A) is added to the obtained third dispersion liquid being sufficiently stirred, and is uniformly dispersed. Thereby, a coating agent for a thermal insulator can be obtained.

In the coating agent obtained by using such a production method, the vein graphite powders, the viscosity-adjustment agent, and the raw material for carbonization can be uniformly dispersed. On the one hand, when vein graphite powders, a viscosity-adjustment agent, and a raw material for carbonization are contained in a water-based solution irrespective of the adding order, each component tend to flocculate to form a block because of the high viscosity of the viscosity-adjustment agent and the raw material for carbonization. As a result, it is difficult to uniformly disperse each component in the water-based solution. On the other hand, in the method of producing a coating agent of the present invention, the third dispersion liquid is first prepared by using the first dispersion liquid obtained by dispersing vein graphite powders in water in advance, and the second dispersion liquid obtained by dispersing the viscosity-adjustment agent in the organic solvent in advance. Accordingly, in the step of preparing the third dispersion liquid, it is possible to uniformly disperse the vein graphite powders, and the viscosity-adjustment agent in the water-based solution. As a result, the compatibility between the raw material for carbonization and the third dispersion liquid is improved by adding and mixing the raw material for carbonization to the third dispersion liquid. Thus, it is possible to uniformly disperse the raw material for carbonization. Therefore, it is possible to disperse each component.

Note that, in the method of producing the present coating agent , the mass ratio of the water contained as the water-based solution to the organic solvent is preferably water:organic solvent=about 20:1 to 5:1, and more preferably about 15:1 to 5:1. Such a mass ratio enables the viscosity-adjustment agent to be dispersed or dissolved without flocculation. Meanwhile, each step of the present method is preferably carried out at about room temperature to 50°C.

Next, a method using the present coating agent to produce the coating layer of the laminated body for a thermal insulator of the present invention will be described.

The method basically comprises a step of coating with a coating agent for a thermal insulator, and a step of carbonizing the coating agent . In the step of coating with the coating agent one surface, both surfaces, or entire surface of the carbonized-molded body having a bulk density of 0.08 g/cm$^3$ to 0.8 g/cm$^3$ is coated with the above described coating agent, and dried at a temperature condition of 150°C for about 3 hours with or without pressing to harden the resin. Thereby, a laminated body before carbonization which is coated with the coating agent is obtained.

The coated material used to produce the coating layer is a carbonized-molded body having a bulk density of 0.08 g/cm$^3$ to 0.8 g/cm$^3$, more preferably a carbonized-molded body having a bulk density of 0.09 g/cm$^3$ to 0.75 g/cm$^3$, and further preferably a carbonized-molded body having a bulk density of 0.1 g/cm$^3$ to 0.7 g/cm$^3$. When the bulk density of the carbonized-molded body is less than 0.08 g/cm$^3$, each component of the coating agent flows in the inside of the carbonized-molded body during the coating with the coating agent. AS a result, a sufficient coating layer is not formed. In contrast, when the bulk density exceeds 0.8 g/cm$^3$, the heat insulating effect is reduced.

As such a carbonized-molded body, targeted is a carbonized-molded body which/ should prevent the peel-off of the coating layer from the surface of the carbonized-molded body and prevent the occurrence of dust and the like; should impart surface smoothness and surface glossiness to the surface; and particularly should increase the mechanical strength of the laminated body obtained by carbonization. Such a carbonized-molded body can include, for example, carbonized-molded bodies with the single-layered or multiple-layered of carbon fiber felt, a graphite sheet, carbon fiber cloth or, carbon fiber-containing paper.

The method of coating the carbonized-molded body with the coating agent is not particularly limited. A known method can suitably be applied as such a method. Such a method can include, for example, a method in which a machine such as a printer and a bar coater is used, a method in which e.g. a roller or a brush are used, and a method in which the coating is carried out by spraying using a sprayer.

The coated amount of the coating agent varies in accordance with the kind of a coated carbonized-molded body, but is preferably 500 g/m$^2$ to 2000 g/m$^2$, and more preferably 700 g/m$^2$ to 1500 g/m$^2$. When the coated amount is less than 500 g/m$^2$, the thickness of the obtained coating layer tends to be less than 50 $\mu$m. On the other hand, when the coated amount exceeds 2000 g/m$^2$, the thickness of the obtained coating layer tends to exceed 3mm, resulting in an uneconomical situation.

Subsequently, the step of carbonizing the coating agent will be described. In the step of carbonizing the coating agent , the carbonization of the laminated body before carbonization which is covered with the coating agent obtained in the above manner is carried out. By carrying out such carbonization, a layer is formed in which the coating agent itself is carbonized. Thus, it is possible to produce the coating layer on the surface of the carbonized-molded body. Moreover, by forming the coating layer on the surface of the carbonized-molded body in such a manner, a laminated body of the present invention, which is formed by layering the coating layer on the surface of the carbonized-molded body, can be obtained. Note that, the term "carbonization" means the heat treatment including a carbonization-calcination treatment at a generally used temperature of about 800°C or more to less than 2000°C, and a graphitization treatment at 2000°C to 3000°C inclusive, as described above.

In the step of carbonizing the coating agent , the carbonized-molded body coated with the coating agent is simultaneously carbonized in general. Furthermore, calcination can also be carried out for the higher purification or ultra-purification of the laminated body itself obtained by the carbonization.

Any of carbonization conditions is suitably set so as to conform the kind of the carbonized-molded body and the usage of the obtained laminated body , and accordingly cannot generally be specified. For example, when the carbonized-molded body to be used is carbon fiber felt, it is preferable to employ the condition that the carbonized-molded body is held at a temperature condition of 2000°C for 1 hour in a non-oxidation gas atmosphere or in vacuum by using a high temperature heating furnace. When such carbonization is carried out, in the process of heat decomposition at a low temperature, the temperature is preferably slowly increased up to about 700°C, for example, at a temperature increase rate of $150\pm50$ °C/hr in order to prevent the occurrence of stress due to rapid contraction during the gasification of the water-based solution and the like. If the temperature is rapidly increased over the temperature range described above in such a heat decomposition process at a low temperature, the coating layer tend to be easily peeled off from the obtained laminated body for a thermal insulator. Furthermore, cracks tend to occur in the coating layer . As a result, properties such as the air permeability and oxidation resistance of the obtained laminated body tend to be deteriorated.

The laminated body obtained in the above manner (for example, carbon fiber felt) is used as a thermal insulator, but is preferably used by varying the bulk density thereof appropriately in accordance with a furnace for which the thermal insulator is used, and in accordance with the thickness of the thermal insulator itself.

Note that, when necessary, the coating agent can be coated on the surface of the carbonized-molded body on which a surface-covering material such as carbon fiber cloth, carbon fiber-containing paper and c/c composite is layered to produce the coating layer of the laminated body, of the present invention. Moreover, when necessary, a surface-covering material such as pyrolyzed carbon may further be layered on the surface of the coating layer in the laminated body .

Examples

The present invention will more specifically be described below on the basis of examples and comparative examples. The present invention is not limited to the following examples. Note that the measurements of the air permeability, amount of the generated dust particles, oxidation resistance and bending strength of the coating layer were carried out according to the above described measurement method. The measurements of the average fiber length, compression strength, surface smoothness, and surface glossiness were carried out in the following manner. The average particle diameter of the vein graphite powders and carbon breeze used in each example and each comparative example was measured by the measurement method described below.

<Average fiber length>

5 mL of liquid paraffin was measured with a 10 mL dropper, and put in a 30 mL Erlenmeyer flask. Then, a sample was taken from carbon fibers to be used randomly with a microspatula, and added in the Erlenmeyer flask. Thereafter, the carbon fibers were mixed with and dispersed in the liquid paraffin to obtain a dispersion liquid. Subsequently, 300 $\mu$L of the dispersion liquid was taken with a pipettor. This liquid was attached on a first slide glass. Then, a second slide glass was laid thereon and compressed to obtain a sample for measurement. The sample thus obtained was mounted on an image analyzing apparatus (available from Nireco Corporation, trade name: "LUZEX IIIU"). The average fiber length (average in volume) was determined with the measured values of 1000 to 1300 single fibers.

<Compression strength>

As a sample used to measure such compression strength, used was a sample which had the same size as that of the sample used to measure the amount of the generated dust particles, and which was subjected to the same coating treatment which was performed on the sample used to measure the amount of the generated dust particles. A uniaxial compression test was carried out by using the autograph (available from SHIMADZU CORPORATION, trade name: "Shimadzu Autograph AGS-H 5kN") which was used for the measurement of the bending strength described above, and by using a platen for the compression test instead of the supporting point and the punch for the bending test, so that the loading direction is parallel to the orientation surface of the fiber of the sample. Compression strength was determined from the obtained maximum breaking load.

<Surface smoothness and surface glossiness>

The surface smoothness and surface glossiness of the laminated body obtained in each example and each comparative example were visually evaluated. The evaluation criteria are as follows.

Surface smoothness

A: surface is smooth and has no irregularity.

C: surface has irregularity.

Surface glossiness

A: surface has a gloss.
C: surface has no gloss.

<Average particle diameter of vein graphite powders and carbon breeze>

The powder sample of vein graphite powders or carbon breeze used in each example and each comparative example is prepared. Then, about 0.5 g of the powder sample is put in a beaker. Subsequently, several drops of a dispersant (available from SAN NOPCO LIMITED, trade name: "SN dispersant 7343-C") are added in the beaker. Thereafter, the powder sample is accustomed to the dispersant by shaking up the mixture. After that, 30 mL of pure water is added in the beaker. Then, ultrasonic waves are irradiated to the beaker for about 2 minutes for dispersion. Subsequently, the distribution of the particle diameter is measured using a particle-diameter-distribution measuring device (available from NIKKISO CO., LTD., trade name: "Microtrac FRA-9220"). The average particle diameter of the powder sample was determined to the first decimal place by rounding the accumulative 50% particle diameter (that is, a particle diameter which has an accumulated volume of 50% in the particle diameter distribution) at the second decimal place.

Example 1

[Preparation of carbonized-molded body]

44 parts by mass of a phenolic resin-based impregnating liquid (available from SHOWA HIGHPOLYMER CO., LTD., trade name: "SHONOL BRS-3896") was impregnated relative to 100 parts by mass of pitch-based carbon fiber felt having an average fiber length of 50 mm (available from KUREHA CORPORATION, trade name: "KRECA FELT F-110") to obtain a laminated body having six layers layered thereon in a tabular form. Then, the laminated body thus obtained was press-molded at 150°C at a pressure of 0.015 MPa to harden the resin. Thereafter, the laminated body including the resin hardened in such a manner was further graphitized in vacuum at a temperature condition of 2000 °C for 1 hour to obtain a tabular carbon fiber felt laminated body (carbonized-molded body: 48mm thick) having a bulk density of 0.16 g/cm$^3$ at the felt portion.

[Preparation of coating agent ]

The coating agent was prepared using 100 parts by mass of a furan resin (available from Hitachi Chemical Co., Ltd., trade name: "HITA FURAN VF-302"), 48 parts by mass of vein graphite powders (A) (available from Nippon Graphite Industry, Co., Ltd., trade name: "F#2-F", average particle diameter 176 $\mu$m), 21 parts by mass of vein graphite powders (B) (available from Nippon Graphite Industry Co., Ltd., trade name: "ACP-3000", average particle diameter 11.8 $\mu$m), 45 parts by mass of butyl diglycol (available from Nippon Nyukazai Co., Ltd., trade name: "Butyl diglycol"), 4.5 parts by mass of methylcellulose (available from Shin-Etsu Chemical Co., Ltd., trade name: "Metolose SM-4000"), and 220 parts by mass of water. Specifically, in the preparation of the coating agent, the vein graphite powders (A) and (B) were first put in water being stirred with a stirrer, and uniformly dispersed to obtain a dispersion liquid (a). Then, the methylcellulose was dispersed in the butyl diglycol by stirring until the block thereof disappeared to obtain a dispersion liquid (b). Subsequently, the dispersion liquid (b) was added to the dispersion liquid (a) thus obtained. Thereafter, the liquids were uniformly mixed and dispersed while being sufficiently stirred to obtain a dispersion liquid (c). After that, the furan resin was added to the obtained dispersion liquid (c) while being sufficiently stirred, and was uniformly mixed and dispersed to obtain the coating agent.

[Production of coating layer and laminated body

The coating agent was first coated on one surface of the carbon fiber felt laminated body which had been cut off in a size having a longitudinal length of 100 mm, a transverse length of 100 mm, and a thickness of 6 mm using a brush at a rate of 1 kg/m$^2$. Then, the coating agent was dried at a temperature condition of 150°C without pressing for 3 hours, while the resin was hardened. Subsequently, the temperature was increased to 700°C at a temperature increase rate of 150 °C/hr in vacuum. Thereafter, the temperature was increased to a holding temperature of 2000°C at a temperature increase rate of 250 °C/hr. The graphitization (carbonization) treatment was performed thereon at the holding temperature for 1 hour to obtain a laminated body on the one surface of which a coating layer was layered. The surface of the coating layer which was layered on the laminated body thus obtained was smooth and glossy.

The laminated body thus obtained was used as a sample for an air permeability test. On the other hand, samples used to measure the amount of the generated dust particles, oxidation resistance, bending strength and compression strength were prepared by cutting off the carbonized-molded body prepared as described above in a size used in each test, and thereafter by using the same methods as described above such as the coating step and carbonization step employed to the laminated body.

Example 2

A laminated body and samples to be used in each test were produced in the same manner as that of Example 1 except that used was a carbon fiber felt laminated body (carbonized-molded body) having a bulk density of $0.12 \text{ g/cm}^3$ obtained by the graphitization treatment at 2000 ° C in the same procedure as that of the carbonized-molded body preparation of Example 1 so that the carbon fiber felt laminated body may have the bulk density of $0.12 \text{ g/cm}^3$ instead of obtaining the carbon fiber felt laminated body having a bulk density of $0.16 \text{ g/cm}^3$ which was prepared in Example 1. The surface of the coating layer which was layered on the laminated body thus obtained was smooth and glossy.

Example 3

A laminated body and samples to be used in each test were produced in the same manner as that of Example 1 except that used was a carbon fiber felt having a bulk density of $0.4 \text{ g/cm}^3$ obtained by the graphitization treatment at 2000°C in the same procedure as that of the carbonized-molded body preparation of Example 1 so that the carbon fiber felt laminated body may have the bulk density of $0.4 \text{ g/cm}^3$ instead of obtaining the carbon fiber felt laminated body having a bulk density of $0.16 \text{ g/cm}^3$ which was prepared in Example 1 . The surface of the coating layer which was layered on the laminated body thus obtained was smooth and glossy.

Example 4

A laminated body and samples to be used in each test were produced in the same manner as that of Example 1 except that the content of the vein graphite powders (A) (available from Nippon Graphite Industry, Co., Ltd., trade name: "F#2-F") of Example 1 was changed from 48 parts by mass to 28 parts by mass, and that the content of the vein graphite powders (B) (available from Nippon Graphite Industry, Co., Ltd., trade name: "ACP-3000") of Example 1 was changed from 21 parts by mass to 41 parts by mass. The surface of the coating layer which was layered on the laminated body thus obtained was smooth and glossy.

Example 5

A laminated body and samples to be used in each test were produced in the same manner as that of Example 1 except that a carbonized-molded body having a bulk density of $0.7 \text{ g/cm}^3$ (available from KUREHA CORPORATION, trade name: "KRECA NFR") was used instead of the carbon fiber felt laminated body having a bulk density of $0.16 \text{ g/cm}^3$ prepared in Example 1. The surface of the coating layer which was layered on the laminated body thus obtained was smooth and glossy.

Example 6

A laminated body and samples to be used in each test were produced in the same manner as that of Example 1 except that used was a coating agent prepared by uniformly mixing and dispersing 100 parts by mass of a furan resin (available from Hitachi Chemical Co., Ltd., trade name: "HITA FURAN VF-302"), 50 parts by mass of vein graphite powders (A) (available from Nippon Graphite Industry Co., Ltd., trade name: "F#2-F"), 50 parts by mass of vein graphite powders (B) (available from Nippon Graphite Industry Co., Ltd., trade name: "ACP-3000"), 50 parts by mass of carbon fibers (available from KUREHA CORPORATION, trade name: "KRECA CHOP M-107T", average fiber length 0.4 mm, L/D=about 22), 20 parts by mass of methyl ethyl ketone (available from KANTO CHEMICAL CO., INC., CICA front rank), 5 parts by mass of methylcellulose (available from Shin-Etsu Chemical Co., Ltd., trade name: "Metolose SM-4000"), and 175 parts by mass of water instead of the coating agent prepared in Example 1. The surface of the coating layer which was layered on the laminated body thus obtained was smooth and glossy.

Example 7

A laminated body and samples to be used in each test were produced in the same manner as that of Example 1 except that used was a coating agent prepared by changing the content of the carbon fibers of the coating agent prepared in Example 6 from 50 parts by mass to 100 parts by mass instead of the coating agent prepared in Example 1. The surface of the coating layer which was layered on the laminated body thus obtained was smooth and glossy.

Example 8

A laminated body and samples to be used in each test were produced in the same manner as that of Example 1 except that used was a coating agent prepared by changing the content of the methylcellulose (available from Shin-Etsu Chemical Co., Ltd., trade name: "Metolose SM-4000") of the coating agent prepared in Example 1 from 4.5 parts by mass to 2.3 parts by mass instead of the coating agent prepared in Example 1. The surface of the coating layer which was layered on the laminated body thus obtained was smooth and glossy.

Example 9

A laminated body and samples to be used in each test were produced in the same manner as that of Example 1 except that used was a coating agent prepared by changing the methylcellulose (available from Shin-Etsu Chemical Co., Ltd., trade name: "Metolose SM-4000") of the coating agent prepared in Example 1 to another methylcellulose (available from Shin-Etsu Chemical Co., Ltd., trade name: "Metolose SM-1500"), and further changing the content of the methylcellulose from 4.5 parts by mass to 9.0 parts by mass instead of the coating agent prepared in Example 1. The surface of the coating layer which was layered on the laminated body thus obtained was smooth and glossy.

Example 10

A laminated body and samples to be used in each test were produced in the same manner as that of Example 1 except that used was a coating agent prepared by changing the methylcellulose (available from Shin-Etsu Chemical Co., Ltd., trade name: "Metolose SM-4 000") of the coating agent for a thermal insulator prepared in Example 1 to another methylcellulose (available from Shin-Etsu Chemical Co., Ltd., trade name: "Metolose S-400"), and further changing the content of the methylcellulose from 4.5 parts by mass to 22.5 parts by mass instead of the coating agent prepared in Example 1. The surface of the coating layer which was layered on the laminated body thus obtained was smooth and glossy.

Example 11

A laminated body and samples to be used in each test were produced in the same manner as that of Example 1 except that used was a coating agent prepared by changing the content of butyl diglycol (available from Nippon Nyukazai Co., Ltd., trade name: "Butyl diglycol") of the coating agent prepared in Example 1 from 45 parts by mass to 18 parts by mass instead of the coating agent prepared in Example 1 . The surface of the coating layer which was layered on the laminated body thus obtained was smooth and glossy.

Comparative Example 1

Instead of the coating agent prepared in Example 1, a coating agent was prepared in the same manner as that of Example 1 except that methylcellulose was not used. However, in the coating agent prepared in such a manner, the furan resin (available from Hitachi Chemical Co., Ltd., trade name: "HITA FURAN VF-302"), the vein graphite powders (A) (available from Nippon Graphite Industry Co., Ltd., trade name: "F#2-F"), and the vein graphite powders (B) (available from Nippon Graphite Industry Co., Ltd., trade name: "ACP-3000") were each formed in a cluster and separated from one another. As a result, it was impossible to disperse and mix the components uniformly.

Comparative Example 2

A laminated body and samples to be used in each test were produced in the same manner as that of Example 1 except that used was a coating agent prepared by changing the content of the carbon fibers of the coating agent prepared in Example 6 from 50 parts by mass to 100 parts by mass, and the content of methyl ethyl ketone from 20 parts by mass to 200 parts by mass, and further by mixing and dispersing the components which did not include the vein graphite powders (B) (available from Nippon Graphite Industry Co., Ltd., trade name: "ACP-3000"), methylethylcellulose and water instead of the coating agent prepared in Example 1. The surface of the coating layer which was layered on the laminated body thus obtained had irregularity, and was not glossy.

Comparative Example 3

A laminated body and samples to be used in each test were produced in the same manner as that of Example 1 except that used was a coating agent prepared by changing the content of methyl ethyl ketone of the coating agent prepared in Example 6 from 20 parts by mass to 200 parts by mass, and by mixing and dispersing the components which did not include methylethylcellulose and water instead of the coating agent prepared in Example 1. The surface of the coating layer of the laminated body thus obtained had irregularity, and was not glossy.

Comparative Example 4

A laminated body and samples to be used in each test were produced in the same manner as that of Example 1 except that used was a coating agent prepared by changing the content of the carbon fibers of the coating agent prepared in Example 6 from 50 parts by mass to 100 parts by mass, and the content of methyl ethyl ketone from 20 parts by mass to 200 parts by mass, and further by mixing and dispersing the components which did not include methylcellulose and water instead of the coating agent prepared in Example 1. The surface of the coating layer which was layered on the laminated body thus obtained had irregularity, and was not glossy.

Comparative Example 5

A laminated body and samples to be used in each test were produced in the same manner as that of Example 1 except that used was a coating agent prepared by changing the content of the vein graphite powders (A) (available from Nippon Graphite Industry Co., Ltd., trade name: "F#2-F") of the coating agent prepared in Example 6 from 50 parts by mass to 100 parts by mass, and the content of methyl ethyl ketone from 20 parts by mass to 200 parts by mass, further by using 100 parts by mass of carbon breeze (a pulverized product [average particle diameter 11.0 um] obtained by pulverizing "MC cokes grade C": trade name available from SUN CHEMICAL CORPORATION) instead of 50 parts by mass of the vein graphite powders (B) (available from Nippon Graphite Industry Co., Ltd., trade name: "ACP-3000") and by mixing and dispersing the components which did not include the carbon fiber, methylcellulose and water instead of the coating agent prepared in Example 1. The surface of the coating layer which was layered on the laminated body thus obtained had irregularity, and was not glossy.

Table 1 shows the content of each component, the measurement result of the air permeability, amount of the generated dust particles, oxidation resistance, bending strength, compression strength, surface smoothness and surface glossiness of the coating agents obtained in Examples 1 to 11 and Comparative Examples 1 to 5.

[Table 1]

| | Example 1 | Example 2 | Example 3 | Example 4 | Example 5 | Example 6 | Example 7 | Example 8 | Example 9 | Example 10 | Example 11 | comparative Example 1 | Comparative Example 2 | Comparative Example 3 | comparative Example 4 | Comparative Example 5 |
|---|---|---|---|---|---|---|---|---|---|---|---|---|---|---|---|---|
| HITA FURAN VF-302(parts by mass) | 100 | 100 | 100 | 100 | 100 | 100 | 100 | 100 | 100 | 100 | 100 | 100 | 100 | 100 | 100 | 100 |
| F#2-F (parts by mass) | 48 | 48 | 48 | 28 | 48 | 50 | 50 | 48 | 48 | 48 | 48 | 48 | 50 | 50 | 50 | 100 |
| ACP-3000 (parts by mass) | 21 | 21 | 21 | 41 | 21 | 50 | 50 | 21 | 21 | 21 | 21 | 21 | 0 | 50 | 50 | 0 |
| Pulverized product of MC COKES grade C (parts by mass) | 0 | 0 | 0 | 0 | 0 | 0 | 0 | 0 | 0 | 0 | 0 | 0 | 0 | 0 | 0 | 100 |
| M-107T (parts by mass) | 0 | 0 | 0 | 0 | 0 | 50 | 100 | 0 | 0 | 0 | 0 | 0 | 100 | 50 | 100 | 0 |
| Butyl diglycol (parts by mass) | 45 | 45 | 45 | 45 | 45 | 0 | 0 | 45 | 45 | 45 | 18 | 45 | 0 | 0 | 0 | 0 |

EP 1 881 040 B1

19

(continued)

| | Example 1 | Example 2 | Example 3 | Example 4 | Example 5 | Example 6 | Example 7 | Example 8 | Example 9 | Example 10 | Example 11 | comparative Example 1 | Comparative Example 2 | Comparative Example 3 | comparative Example 4 | Comparative Example 5 |
|---|---|---|---|---|---|---|---|---|---|---|---|---|---|---|---|---|
| Methyl ethyl ketone (parts by mass) | 0 | 0 | 0 | 0 | 0 | 20 | 20 | 0 | 0 | 0 | 0 | 0 | 200 | 200 | 200 | 200 |
| SM-4000 (parts by mass) | 4.5 | 4.5 | 4.5 | 4.5 | 4.5 | 5.0 | 5.0 | 2.3 | 0.0 | 0.0 | 4.5 | 0.0 | 0.0 | 0.0 | 0.0 | 0.0 |
| SM-1500 (parts by mass) | 0.0 | 0.0 | 0.0 | 0.0 | 0.0 | 0.0 | 0.0 | 0.0 | 9.0 | 0.0 | 0.0 | 0.0 | 0.0 | 0.0 | 0.0 | 0.0 |
| SM-400 (parts by mass) | 0.0 | 0.0 | 0.0 | 0.0 | 0.0 | 0.0 | 0.0 | 0.0 | 0.0 | 22.5 | 0.0 | 0.0 | 0.0 | 0.0 | 0.0 | 0.0 |
| Water (parts by mass) | 220 | 220 | 220 | 220 | 220 | 175 | 175 | 220 | 220 | 220 | 220 | 220 | 0 | 0 | 0 | 0 |
| Thickness of coating layer ($\mu$m) | 200 | 200 | 200 | 200 | 200 | 300 | 350 | 200 | 200 | 300 | 200 | - | 450 | 400 | 500 | 600 |
| Air permeability (NL/hr·cm2·m mH2O) | 5.6 | 5.6 | 5.6 | 5.8 | 5.6 | 6.0 | 6.4 | 7.2 | 6.3 | 6.2 | 5.6 | - | 13.4 | 10.8 | 10.2 | 8.5 |

| | | Example 1 | Example 2 | Example 3 | Example 4 | Example 5 | Example 6 | Example 7 | Example 8 | Example 9 | Example 10 | Example 11 | comparative Example 1 | Comparative Example 2 | Comparative Example 3 | comparative Example 4 | Comparative Example 5 |
|---|---|---|---|---|---|---|---|---|---|---|---|---|---|---|---|---|---|
| amount of Generated dust particles | | 46 | 43 | 41 | 104 | 52 | 53 | 231 | 55 | 62 | 56 | 47 | - | 1253 | 873 | 462 | 383 |
| Oxidation resistance | 5 hours | 2.2 | 2.4 | 2.0 | 2.6 | 1.8 | 3.2 | 5.0 | 2.4 | 3.2 | 3.0 | 2.2 | - | 6.7 | 6.5 | 5.7 | 5.4 |
| (% by mass) | 10 hours | 5.6 | 5.9 | 5.3 | 6.3 | 4.8 | 6.3 | 7.0 | 6.0 | 6.4 | 6.7 | 5.6 | - | 20.4 | 19.8 | 12.6 | 10.2 |
| Bending strength (MPa) | | 2.3 | 1.5 | 3.3 | 2.2 | 5.3 | 2.0 | 1.7 | 2.2 | 2.0 | 2.0 | 2.3 | - | 1.0 | 1.2 | 1.5 | 1.5 |
| Compression strength (MPa) | | 1.0 | 1.0 | 1.5 | 0.9 | 2.8 | 0.9 | 0.7 | 0.9 | 0.9 | 0.9 | 1.0 | - | 0.6 | 0.6 | 0.7 | 0.7 |
| Surface smoothness | | A | A | A | A | A | A | A | A | A | A | A | - | C | C | C | C |
| Surface glossiness | | A | A | A | A | A | A | A | A | A | A | A | - | C | C | C | C |

As apparent from the results shown in Table 1, it was recognized that all of the coating layers of the laminated bodies of the present invention obtained by using the coating agents prepared in Examples 1 to 11 had an air permeability as low as 7.2 NL/hr·cm$^2$·mmH$_2$O or less, which was sufficiently low. It was also recognized that the coating layer had the excellent dust-prevention property from the fact that all of the laminated bodies of the present invention on which the coating layers were layered generated 300 or less of dust particles. It was further recognized that the laminated bodies of the present invention on which the coating layers were layered had the excellent oxidation resistance, also high bending strength and high compression strength, and furthermore high mechanical strength.

On the other hand, it was recognized that any of the coating layers obtained by using the coating agents prepared in Comparative Examples 2 to 5 had the air permeability of 8.5 NL/hr·cm$^2$·mmH$_2$O or more, which is high. It was further recognized that the layered bodies on which the coating layers was layered had insufficient properties such as the dust-prevention property, oxidation resistance and mechanical strength. It was also recognized that the coating agent prepared in Comparative Example 1 was so low in the workability that the carbonized-molded body was not able to be coated therewith.

**Industrial Applicability**

As described above, according to the present invention, it is possible to provide a coating layer of a laminated body which has a smooth and dense surface; is excellent in surface smoothness and surface glossiness; has a sufficiently low air permeability; and further is capable of imparting an excellent dust-prevention property, an excellent oxidation resistance, an excellent mechanical strength and an excellent heat insulating effect to a laminated body. It is also possible to provide a laminated body provided with the coating layer, a coating agent to obtain the coating layer, and a method of producing the coating agent .

Therefore, the coating layer of the laminated body of the present invention is excellent in imparting the various properties necessary to a thermal insulator, and accordingly very useful as a coating layer to obtain the laminated body for a thermal insulator of the present invention which uses the carbonized-molded body.

**Claims**

1.  Laminated body, comprising (1) a carbonized-molded body having a bulk density of 0.08-0.8 g/cm$^3$, and (2) a coating layer which

    (i) has an air permeability of $\leq$ 8.0 NL/h cm$^2$ mm H$_2$O; determined by repeatedly measuring the differential pressure generated on the two sides of the laminated body by passing an air flow of 600 NL/h through a sample thereof having a circular area of 19 mm diameter and calculating the air permeability (Pair) according to the equation

$$P_{air} = Q/(S \cdot \Delta p)$$

    wherein

    Q = air flow rate (600 NL/h)
    S = measurement area [(1.9/2)$^2$·$\Pi$ = 2,84 cm$^2$] $\Delta$p = average differential pressure (mm H$_2$O) of ten measurements; and

    (ii) is layered on at least one surface of the carbonized-molded body by coating at least one surface of the carbonized-molded body with a coating agent for a thermal insulator comprising

    (A) at least one raw material for carbonization selected from pitch, a phenol resin and a furan resin;
    (B) vein graphite powders;
    (C) at least one viscosity-adjustment agent selected from methyl cellulose, ethyl cellulose, methyl ethyl cellulose, hydroxyethyl methyl cellulose, hydroxymethyl ethyl cellulose, hydroxypropyl methyl cellulose, polyacrylamide, polyvinyl alcohol and starch; and
    (D) a water-based solution capable of dispersing or dissolving (A) and of dissolving (C), which comprises water and at least one organic solvent compatible with water, selected from alcohols, aldehydes, ketones and glycols;

and then carbonizing the coating agent.

2. The laminated body of claim 1, wherein the thickness of the coating layer (2) is 0.050-3 mm.

3. The laminated body of claim 1, wherein the coating layer (2) generates ≤ 300 of dust particles having a particle diameter of ≥ 0.3 μm when an inert gas is blown at a flow rate of 500 ml/min for 340 seconds on a laminated body having the coating layer (2) on the entire surface of a carbonized-molded body (1) of 40 x 40 x 40 [mm] size.

4. The laminated body of claim 1, wherein the coating layer (2) shows a mass reduction ratio of ≤ 10.0% in an oxidation resistance test in which a laminated body including the coating layer (2) on the entire surface of a carbonized-molded body (1) of 100 x 100 x 40 [mm] size is held in air at 600°C for 5 hours.

5. The laminated body of claim 4, wherein the mass reduction ratio is ≤ 10.0% after 10 hours of treatment.

6. The laminated body of claim 1, wherein the coating layer (2) has a bending strength of ≥ 1.0 MPa, determined from the maximum breaking load in a bending strength test in which a central concentrated load is applied at a supporting-point span of 80 mm and a crosshead speed of 1.0 mm/min using a laminated body having the coating layer (2) on the top and bottom surfaces of a carbonized-molded body (1) being 20 mm wide, 100 mm long and 10 mm thick.

7. A coating agent for a thermal insulator, comprising;

(A) at least one raw material for carbonization selected from pitch, a phenol resin and a furan resin;
(B) vein graphite powders;
(C) at least one viscosity-adjustment agent selected from methyl cellulose, ethyl cellulose, methyl ethyl cellulose, hydroxyethyl methyl cellulose, hydroxymethyl ethyl cellulose, hydroxypropyl methyl cellulose, polyacrylamide, polyvinyl alcohol and starch; and
(D) a water-based solution capable of dispersing or dissolving (A) and of dissolving (C), which comprises water and at least one organic solvent compatible with water, selected from alcohols, aldehydes, ketones and glycols;

8. The coating agent of claim 7, containing, relative to 100 pbw of the raw material for carbonization (A), 10-200 pbw of the vein graphite powders (B), 2-50 pbw of the viscosity-adjustment agent (C), and 50-600 pbw of the water-based solution (D).

9. The coating agent of claim 7, wherein the viscosity-adjustment agent (C) is methyl cellulose.

10. The coating agent of any of claims 7-9, wherein the raw material for carbonization (A) is a furan resin.

11. The coating agent of any of claims 7-10, wherein the average particle diameter of the vein graphite powders (B) is 50-500 μm.

12. The coating agent of claim 11, wherein the vein graphite powder (B) contains

(B-1) first vein graphite powder having an average particle diameter of 50-500 μm, and
(B-2) second vein graphite powders having an average particle diameter of 1 μm to < 50 μm,

in a weight ratio (B-1):(B-2) of 4:6 to 8:2.

13. A method of producing the coating agent of any of claims 7-12, comprising the steps of:

(i) dispersing vein graphite powders (B) in water to obtain a first dispersion liquid;
(ii) dispersing a viscosity-adjustment agent (C) in an organic solvent compatible with water, selected from alcohols, aldehydes, ketones and glycols, to obtain a second dispersion liquid;
(iii) mixing the first and second dispersion liquids to obtain a third dispersion liquid; and
(iv) dispersing a raw material for carbonization (A) in the third dispersion liquid.

**Patentansprüche**

1. Laminierter Körper, der (1) einen carbonisierten Formkörper mit einer Schüttdichte von 0,08 bis 0,8 g/cm$^3$ und (2) eine Beschichtungsschicht umfasst, die

   (i) eine Luftpermeabilität von ≤ 8,0 NL/h cm$^2$ mm $H_2O$ aufweist; ermittelt durch wiederholtes Messen des Differenzdrucks, der auf den beiden Seiten des laminierten Körpers durch Leiten eines Luftstroms mit 600 NL/h durch eine Probe davon mit einer kreisförmigen Fläche von 19 mm Durchmesser erzeugt wird, und Berechnen der Luftpermeabilität ($P_{air}$) gemäß der Gleichung

   $$P_{air} = Q/(S \cdot \Delta p)$$

   worin

       Q = Luftflussrate (600 NL/h)
       S = Messfläche [$(1,9/2)^2 \cdot \Pi = 2,84$ cm$^2$]
       $\Delta p$ = mittlerer Differenzdruck (mm $H_2O$) von zehn Messungen; und

   (ii) auf mindestens einer Oberfläche des carbonisierten Formkörpers durch Beschichten mindestens einer Oberfläche des carbonisierten Formkörpers mit einem Beschichtungsmittel für einen thermischen Isolator, welches umfasst:

       (A) mindestens ein Rohmaterial für Carbonisierung, ausgewählt aus Pech, einem Phenolharz und einem Furanharz;
       (B) Veingraphitpulver;
       (C) mindestens einen Viskositätsregler, ausgewählt aus Methylcellulose, Ethylcellulose, Methylethylcellulose, Hydroxyetyhlmethylcellulose, Hydroxymethylethylcellulose, Hydroxypropylmethylcellulose, Polyacrylamid, Polyvinylalkohol und Stärke; und
       (D) eine wasserbasierte Lösung, die in der Lage ist, (A) zu dispergieren oder aufzulösen und (C) aufzulösen und mindestens ein mit Wasser kompatibles organisches Lösungsmittel umfasst, ausgewählt aus Alkoholen, Aldehyden, Ketonen und Glycolen;

   und dann Carbonisieren des Beschichtungsmittels aufgebracht ist.

2. Laminierter Körper gemäß Anspruch 1, worin die Dicke der Beschichtungsschicht (2) 0,050 bis 3 mm beträgt.

3. Laminierter Körper gemäß Anspruch 1, worin die Beschichtungsschicht (2) ≤ 300 Staubpartikel mit einem Partikeldurchmesser von ≥ 0,3 μm erzeugt, wenn ein Inertgas mit einer Flussrate von 500 ml/min für 340 Sekunden auf den laminierten Körper, der die Beschichtungsschicht (2) auf der gesamten Oberfläche des carbonisierten Formkörpers (1) der Größe 40 x 40 x 40 [mm] aufweist, geblasen wird.

4. Laminierter Körper gemäß Anspruch 1, worin die Beschichtungsschicht (2) einen Massenminderungsanteil von ≤ 10,0 % in einem Oxidationsbeständigkeitstest zeigt, in welchem der laminierte Körper, der die Beschichtungsschicht (2) auf der gesamten Oberfläche des carbonisierten Formkörpers (1) der Größe 100 x 100 x 40 [mm] beinhaltet, in Luft bei 600°C für 5 Stunden gehalten wird.

5. Laminierter Körper gemäß Anspruch 4, worin der Massenminderungsanteil ≤ 10,0 % nach 10 Stunden der Behandlung beträgt.

6. Laminierter Körper gemäß Anspruch 1, worin die Beschichtungsschicht (2) eine Biegefestigkeit von ≥ 1,0 MPa aufweist, die aus der maximalen Bruchlast in einem Biegefestigkeitstest bestimmt wird, in welchem eine mittig konzentrierte Last bei einem Stützpunktabstand von 80 mm und einer Traversengeschwindigkeit von 1,0 mm/min unter Verwendung eines laminierten Körpers mit der Beschichtungsschicht (2) auf der Ober- und Unterseite eines 20 mm breiten, 100 mm langen und 10 mm dicken carbonisierten Formkörpers (1) aufgebracht wird.

7. Beschichtungsmittel für einen thermischen Isolator, welches umfasst:

(A) mindestens ein Rohmaterial für die Carbonisierung ausgewählt aus Pech, einem Phenolharz und einem Furanharz;
(B) Veingraphitpulver;
(C) mindestens einen Viskositätsregler, ausgewählt aus Methylcellulose, Ethylcellulose, Methylethylcellulose, Hydroxyetyhlmethylcellulose, Hydroxymethylethylcellulose, Hydroxypropylmethylcellulose, Polyacrylamid, Polyvinylalkohol und Stärke; und
(D) eine wasserbasierte Lösung, die in der Lage ist, (A) zu dispergieren oder aufzulösen und (C) aufzulösen, und mindestens ein mit Wasser kompatibles organisches Lösungsmittel umfasst, ausgewählt aus Alkoholen, Aldehyden, Ketonen und Glycolen.

8. Beschichtungsmittel gemäß Anspruch 7, welches bezogen auf 100 Gew.-Teile des Rohmaterials für die Carbonisierung (A) 10 bis 200 Gew.-Teile Veingraphitpulver (B), 2 bis 50 Gew.-Teile des Viskositätsreglers (C) und 50 bis 600 Gew.-Teile der wasserbasierten Lösung (D) enthält.

9. Beschichtungsmittel gemäß Anspruch 7, worin der Viskositätsregler (C) Methylcellulose ist.

10. Beschichtungsmittel gemäß einem der Ansprüche 7 bis 9, worin das Rohmaterial für die Carbonisierung (A) ein Furanharz ist.

11. Beschichtungsmittel gemäß einem der Ansprüche 7 bis 10, worin der mittlere Partikeldurchmesser des Veingraphitpulvers (B) 50 bis 500 $\mu$m beträgt.

12. Beschichtungsmittel gemäß Anspruch 11, worin das Veingraphitpulver (B)

(B-1) ein erstes Veingraphitpulver mit einem mittleren Partikeldurchmesser von 50 bis 500 $\mu$m und
(B-2) ein zweites Veingraphitpulver mit einem mittleren Partikeldurchmesser von 1 $\mu$m bis < 50 $\mu$m

in einem Gewichtsverhältnis (B-1):(B-2) von 4:6 bis 8:2 enthält.

13. Verfahren zur Herstellung des Beschichtungsmittels gemäß einem der Ansprüche 7 bis 12, welches die Schritte umfasst:

(i) Dispergieren der Veingraphitpulver (B) in Wasser, um eine erste Dispersionsflüssigkeit zu erhalten;
(ii) Dispergieren des Viskositätsreglers (C) in einem wasserkompatiblen organischen Lösungsmittel ausgewählt aus Alkoholen, Aldehyden, Ketonen und Glycolen, um eine zweite Dispersionsflüssigkeit zu erhalten;
(iii) Mischen der ersten und zweiten Dispersionsflüssigkeit, um eine dritte Dispersionsflüssigkeit zu erhalten; und
(iv) Dispergieren des Rohmaterials für die Carbonisierung (A) in der dritten Dispersionsflüssigkeit.

**Revendications**

1. Corps stratifié, comprenant (1) un corps carbonisé-moulé ayant une densité apparente de 0,08 à 0,8 g/cm$^3$, et (2) une couche de revêtement qui

(i) a une perméabilité à l'air de $\leq$ 8,0 NL/h cm$^2$ mm H$_2$O ; déterminée par mesure répétée de la pression différentielle générée sur les deux côtés du corps stratifié en faisant passer un flux d'air de 600 NL/h à travers un échantillon de celui-ci ayant une superficie circulaire de 19 mm de diamètre et en calculant la perméabilité à l'air (Pair) conformément à l'équation

$$P_{air} = Q/(S \cdot \Delta p)$$

dans laquelle

Q = débit d'air (600 NL/h)
S = superficie de mesure [(1,9/2)$^2 \cdot \Pi$ = 2,84 cm$^2$]
$\Delta$p = pression différentielle moyenne (mm H$_2$O) de dix mesures ; et

(ii) est déposée en couche sur au moins une surface du corps carbonisé-moulé par revêtement d'au moins une surface du corps carbonisé-moulé avec un agent de revêtement pour un isolateur thermique comprenant

(A) au moins une matière première pour carbonisation choisie parmi un brai, une résine phénolique et une résine de furane ;
(B) des poudres de graphite brut ;
(C) au moins un agent d'ajustement de la viscosité choisi parmi la méthylcellulose, l'éthylcellulose, la méthyléthylcellulose, l'hydroxyéthylméthylcellulose, l'hydroxyméthyléthylcellulose, l'hydroxypropylméthylcellulose, un polyacrylamide, un poly(alcool vinylique) et un amidon ; et
(D) une solution à base aqueuse apte à disperser ou dissoudre (A) et à dissoudre (C), qui comprend de l'eau et au moins un solvant organique compatible avec l'eau, choisi parmi des alcools, des aldéhydes, des cétones et des glycols ;

et ensuite en carbonisant l'agent de revêtement.

**2.** Corps stratifié selon la revendication 1, dans lequel l'épaisseur de la couche de revêtement (2) est 0,050 à 3 mm.

**3.** Corps stratifié selon la revendication 1, dans lequel la couche de revêtement (2) génère ≤ 300 particules de poussières ayant un diamètre de particules de ≥ 0,3 $\mu$m lorsqu'un gaz inerte est soufflé à un débit de 500 ml/min pendant 340 secondes sur un corps stratifié ayant la couche de revêtement (2) sur la totalité de la surface d'un corps carbonisé-moulé (1) d'une taille de 40 x 40 x 40 [mm].

**4.** Corps stratifié selon la revendication 1, dans lequel la couche de revêtement (2) montre un rapport de réduction en masse de ≤ 10,0% dans un test de résistance à l'oxydation dans lequel un corps stratifié incluant la couche de revêtement (2) sur la totalité de la surface d'un corps carbonisé-moulé (1) d'une taille de 100 x 100 x 40 [mm] est maintenu dans l'air à 600°C pendant 5 heures.

**5.** Corps stratifié selon la revendication 4, dans lequel le rapport de réduction en masse est ≤ 10,0% après 10 heures de traitement.

**6.** Corps stratifié selon la revendication 1, dans lequel la couche de revêtement (2) a une résistance à la flexion de ≥ 1,0 MPa, déterminée à partir de la charge de rupture maximum dans un test de résistance à la flexion dans lequel une charge concentrée centrale est appliquée à une étendue de point de support de 80 mm et une vitesse de traverse de 1,0 mm/min en utilisant un corps stratifié ayant la couche de revêtement (2) sur les surfaces supérieure et inférieure d'un corps carbonisé-moulé (1) étant de 20 mm en largeur, 100 mm en longueur et 10 mm en épaisseur.

**7.** Agent de revêtement pour un isolateur thermique, comprenant :

(A) au moins une matière première pour carbonisation choisie parmi un brai, une résine phénolique et une résine de furane ;
(B) des poudres de graphite brut ;
(C) au moins un agent d'ajustement de la viscosité choisi parmi la méthylcellulose, l'éthylcellulose, la méthyléthylcellulose, l'hydroxyéthylméthylcellulose, l'hydroxyméthyléthylcellulose, l'hydroxypropylméthylcellulose, un polyacrylamide, un poly(alcool vinylique) et un amidon ; et
(D) une solution à base aqueuse apte à disperser ou dissoudre (A) et à dissoudre (C), qui comprend de l'eau et au moins un solvant organique compatible avec l'eau, choisi parmi des alcools, des aldéhydes, des cétones et des glycols.

**8.** Agent de revêtement selon la revendication 7, contenant, pour 100 pep de la matière première pour carbonisation (A), 10 à 200 pep des poudres de graphite brut (B), 2 à 50 pep de l'agent d'ajustement de la viscosité (C), et 50 à 600 pep de la solution à base aqueuse (D).

**9.** Agent de revêtement selon la revendication 7, dans lequel l'agent d'ajustement de la viscosité (C) est la méthylcellulose.

**10.** Agent de revêtement selon l'une quelconque des revendications 7 à 9, dans lequel la matière première pour carbonisation (A) est une résine de furane.

**11.** Agent de revêtement selon l'une quelconque des revendications 7 à 10, dans lequel le diamètre moyen de particules des poudres de graphite brut (B) est 50 à 500 μm.

**12.** Agent de revêtement selon la revendication 11, dans lequel la poudre de graphite brut (B) contient

(B-1) une première poudre de graphite brut ayant un diamètre moyen de particules de 50 à 500 μm, et
(B-2) des deuxièmes poudres de graphite brut ayant un diamètre moyen de particules de 1 μm à < 50 μm,

dans un rapport en poids (B-1):(B-2) de 4:6 à 8:2.

**13.** Procédé de production de l'agent de revêtement selon l'une quelconque des revendications 7 à 12, comprenant les étapes de :

(i) dispersion de poudres de graphite brut (B) dans l'eau pour obtenir un premier liquide de dispersion ;
(ii) dispersion d'un agent d'ajustement de la viscosité (C) dans un solvant organique compatible avec l'eau, choisi parmi des alcools, des aldéhydes, des cétones et des glycols, pour obtenir un deuxième liquide de dispersion ;
(iii) mélange du premier et du deuxième liquides de dispersion pour obtenir un troisième liquide de dispersion ; et
(iv) dispersion d'une matière première pour carbonisation (A) dans le troisième liquide de dispersion.

EP 1 881 040 B1

[Fig.1]

28

## REFERENCES CITED IN THE DESCRIPTION

**Patent documents cited in the description**

- JP SHO50104197 B
- JP 50104197 A
- JP HEI3163174 B
- JP 3163174 A
- JP HEI3228886 B
- JP 3228886 A
- EP 1184356 A
- JP 1153572 A
- JP 3258880 A
- EP 0386633 A